# EUROPEAN PATENT APPLICATION

(11) **EP 4 465 565 A1**
(43) Date of publication of application: **20.11.2024**
(21) Application number: 22920025.8
(22) Date of filing: 16.12.2022
(51) Int. Cl.: H04L 1/18

(54) **DISCONTINUOUS RECEPTION TIMER CONTROL METHOD AND APPARATUS, TERMINAL, AND NETWORK DEVICE**

(30) Priority: 11.01.2022 CN 202210027781
(71) Applicant: Datang Mobile Communications Equipment Co., Ltd., Beijing 100085 (CN)
(72) Inventor: CHEN, Li, Beijing 100085 (CN); XING, Yanping, Beijing 100085 (CN); SI, Qianqian, Beijing 100085 (CN)
(74) Representative: Studio Torta S.p.A.
(86) International application number: PCT/CN2022/139621
(87) International publication number: WO 2023/134394

(57) **Abstract**

The present disclosure provides a discontinuous reception timer control method, device, user equipment and network device. The method includes: after performing a HARQ feedback, performing a first control operation on a DRX downlink retransmission timer corresponding to at least one first HARQ process. The first HARQ feedback is a HARQ feedback triggered by DCI scheduling. The first HARQ process refers to a HARQ process for which a first DRX downlink RTT timer has been started or a HARQ process for which a first DRX downlink retransmission timer has been started, before performing the first HARQ feedback, among HARQ processes corresponding to the first HARQ feedback. The first control operation includes at least one of the following: starting a second DRX retransmission timer in case that the first DRX downlink RTT timer expires and downlink data is not correctly received; or maintaining or restarting the first DRX downlink retransmission timer.

## Description

### CROSS-REFERENCE TO RELATED APPLICATION

The present application claims the priority of Chinese Application No. 202210027781.8, filed on January 11, 2022, the disclosure of which is incorporated in its entirety by reference herein.

### TECHNICAL FIELD

The present disclosure relates to the field of communication technologies, and in particular to a discontinuous reception timer control method, device, user equipment and network device.

### BACKGROUND

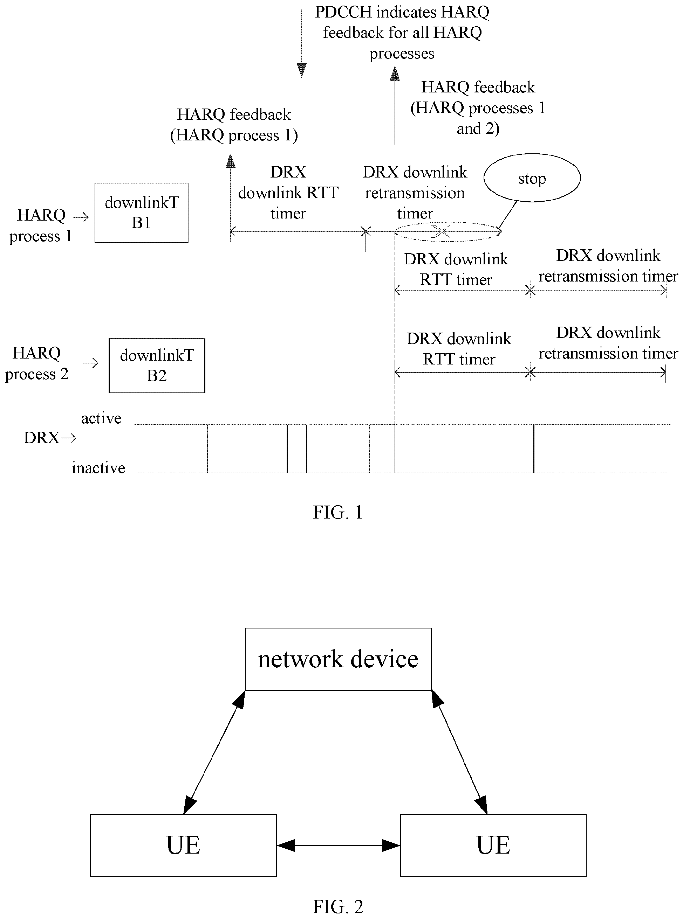

At present, for special Hybrid Automatic Repeat request (HARQ) feedback type (i.e., feedback type triggered by downlink control information (DCI) scheduling), in case that a base station instructs a user equipment (UE) to provide feedback on all carriers and all HARQ processes at one time, if the UE has started a discontinuous reception (DRX) downlink retransmission timer for one HARQ process, the downlink retransmission timer needs to be stopped, and the UE cannot receive retransmission scheduling of the base station. Special HARQ feedback is for multiple processes, especially Type-3 HARQ-ACK codebook is for all HARQ processes, which means that all HARQ processes involved must stop DRX downlink retransmission timers that may have been started, which is obviously not conducive to the timely retransmission scheduling of the base station. Similarly, if DRX downlink round-trip-time (RTT) timers have been started for some processes and corresponding DRX downlink retransmission timer will soon be started, the start of the new RTT timer will interrupt this process (as shown in FIG. 1), which results in a delay in schedulable time of the base station. In FIG. 1, Physical Downlink Control Channel (PDCCH) represents a physical downlink control channel, and Transport Block (TB) represents a transport block.

As described above, for the special HARQ feedback types, the control scheme of the discontinuous reception timer has defects such as inability to schedule retransmissions in a timely manner.

### SUMMARY

An object of the present disclosure is to provide a discontinuous reception timer control method, device, user equipment and network device, which can solve the problem in the related art that retransmission scheduling cannot be carried out in time caused by the discontinuous reception timer control scheme for special HARQ feedback types.

In order to solve the above technical problems, one embodiment of the present disclosure provides a discontinuous reception (DRX) timer control method, applied to a user equipment (UE), including:
after performing a first hybrid automatic repeat request (HARQ) feedback, performing a first control operation on a DRX downlink retransmission timer corresponding to at least one first HARQ process;
wherein the first HARQ feedback is a HARQ feedback triggered by downlink control information (DCI) scheduling;
the first HARQ process refers to a HARQ process for which a first DRX downlink RTT timer has been started or a HARQ process for which a first DRX downlink retransmission timer has been started, before performing the first HARQ feedback, among HARQ processes corresponding to the first HARQ feedback;
the first control operation includes at least one of the following:
starting a second DRX retransmission timer in case that the first DRX downlink RTT timer expires and downlink data is not correctly received; or
maintaining or restarting the first DRX downlink retransmission timer.

Optionally, the HARQ feedback triggered by the DCI scheduling includes at least one of the following:
HARQ feedbacks of all current carriers and all HARQ processes fed back by the UE at one time; or,
HARQ feedbacks of some carriers and/or some HARQ processes fed back by the UE at one time; or,
last HARQ feedback retransmitted by the UE.

Optionally, the starting a second DRX retransmission timer in case that the first DRX downlink RTT timer expires and downlink data is not correctly received, includes:
in case that the first DRX downlink RTT timer has been started before performing the first HARQ feedback, continuing to run the first DRX downlink RTT timer and not starting other DRX downlink RTT timers; in case that the first DRX downlink RTT timer expires and downlink data is not correctly received, starting the second DRX retransmission timer; or,
in case that the first DRX downlink RTT timer has been started before performing the first HARQ feedback, continuing to run the first DRX downlink RTT timer and starting the second DRX downlink RTT timer; in case that the first DRX downlink RTT timer expires and the downlink data is not correctly received, starting the second DRX retransmission timer, and restarting the second DRX retransmission timer in case that the second DRX downlink RTT timer expires.

Optionally, the maintaining or restarting the first DRX downlink retransmission timer, includes:
in case that the first DRX downlink retransmission timer has been started before performing the first HARQ feedback, continuing to run the first DRX downlink retransmission timer and not starting DRX downlink RTT timer corresponding to the first HARQ process; or,
in case that the first DRX downlink retransmission timer has been started before performing the first HARQ feedback, continuing to run the first DRX downlink retransmission timer and starting a third DRX downlink RTT timer; in case that the first DRX downlink retransmission timer expires and downlink data packet is not received correctly, extending duration of DRX downlink retransmission timing; or,
in case that the first DRX downlink retransmission timer has been started before performing the first HARQ feedback and the downlink data packet is not received correctly, restarting the first DRX downlink retransmission timer; or,
in case that the first DRX downlink retransmission timer has been started before performing the first HARQ feedback, restarting the first DRX downlink retransmission timer; or,
in case that the first DRX downlink retransmission timer expires and the downlink data packet is not received correctly, restarting the first DRX downlink retransmission timer.

Optionally, the extending duration of DRX downlink retransmission timing, includes any one of the following:
starting a third DRX downlink retransmission timer in case that the third DRX downlink RTT timer expires;
setting the UE to an active state in a time period between the first DRX downlink retransmission timer and the third DRX downlink retransmission timer, and starting the third DRX downlink retransmission timer when the third DRX downlink RTT timer expires;
extending duration of the first DRX downlink retransmission timer to a starting moment of the third DRX downlink retransmission timer; and starting the third DRX downlink retransmission timer when the third DRX downlink RTT timer expires;
extending the duration of the first DRX downlink retransmission timer to a first duration; wherein the first duration is equal to a sum of the first DRX downlink retransmission timer, the third DRX downlink retransmission timer and a time gap, and the time gap is a time interval between the first DRX downlink retransmission timer and the third DRX downlink retransmission timer.

One embodiment of the present disclosure provides a discontinuous reception (DRX) timer control method, applied to a network device, including:
after receiving a first hybrid automatic repeat request (HARQ) feedback, performing a first control operation on a DRX downlink retransmission timer corresponding to at least one first HARQ process;
wherein the first HARQ feedback is a HARQ feedback triggered by DCI scheduling;
the first HARQ process refers to a HARQ process for which a first DRX downlink RTT timer has been started or a HARQ process for which a first DRX downlink retransmission timer has been started, before receiving the first HARQ feedback, among HARQ processes corresponding to the first HARQ feedback;
the first control operation includes at least one of the following:
   in case that the first DRX downlink RTT timer expires and the first HARQ feedback includes a first acknowledgment feedback, starting a second DRX retransmission timer, wherein the first acknowledgment feedback is a HARQ negative acknowledgment feedback for the first HARQ process; or,
   maintaining or restarting the first DRX downlink retransmission timer.

Optionally, the HARQ feedback triggered by the DCI scheduling includes at least one of the following:
HARQ feedbacks of all current carriers and all HARQ processes fed back by the UE at one time; or,
HARQ feedbacks of some carriers and/or some HARQ processes fed back by the UE at one time; or,
last HARQ feedback retransmitted by the UE.

Optionally, in case that the first DRX downlink RTT timer expires and the first HARQ feedback includes a first acknowledgment feedback, starting a second DRX retransmission timer, includes:
in case that the first DRX downlink RTT timer has been started before receiving the first HARQ feedback, continuing to run the first DRX downlink RTT timer and not starting other DRX downlink RTT timers;
in case that the first DRX downlink RTT timer expires and the first HARQ feedback includes the first acknowledgment feedback, starting the second DRX retransmission timer; or,
in case that the first DRX downlink RTT timer has been started before receiving the first HARQ feedback, continuing to run the first DRX downlink RTT timer and starting the second DRX downlink RTT timer; in case that the first DRX downlink RTT timer expires and the first HARQ feedback includes the first acknowledgment feedback, starting the second DRX retransmission timer, and restarting the second DRX retransmission timer in case that the second DRX downlink RTT timer expires.

Optionally, the maintaining or restarting the first DRX downlink retransmission timer, includes:
in case that the first DRX downlink retransmission timer has been started before receiving the first HARQ feedback, continuing to run the first DRX downlink retransmission timer and not starting DRX downlink RTT timer corresponding to the first HARQ process; or,
in case that the first DRX downlink retransmission timer has been started before receiving the first HARQ feedback, continuing to run the first DRX downlink retransmission timer and starting a third DRX downlink RTT timer; in case that the first DRX downlink retransmission timer expires and the first HARQ feedback includes the first acknowledgment feedback, extending duration of DRX downlink retransmission timing; or,
in case that the first DRX downlink retransmission timer has been started before receiving the first HARQ feedback and the first HARQ feedback includes the first acknowledgment feedback, restarting the first DRX downlink retransmission timer; or,
in case that the first DRX downlink retransmission timer has been started before receiving the first HARQ feedback, restarting the first DRX downlink retransmission timer; or,
in case that the first DRX downlink retransmission timer expires and the downlink data packet is not received correctly, restarting the first DRX downlink retransmission timer.

Optionally, the extending duration of DRX downlink retransmission timing, includes any one of the following:
starting a third DRX downlink retransmission timer in case that the third DRX downlink RTT timer expires;
setting the UE to an active state in a time period between the first DRX downlink retransmission timer and the third DRX downlink retransmission timer, and starting the third DRX downlink retransmission timer when the third DRX downlink RTT timer expires;
extending duration of the first DRX downlink retransmission timer to a starting moment of the third DRX downlink retransmission timer; and starting the third DRX downlink retransmission timer when the third DRX downlink RTT timer expires;
extending the duration of the first DRX downlink retransmission timer to a first duration; wherein the first duration is equal to a sum of the first DRX downlink retransmission timer, the third DRX downlink retransmission timer and a time gap, and the time gap is a time interval between the first DRX downlink retransmission timer and the third DRX downlink retransmission timer.

One embodiment of the present disclosure provides a user equipment (UE), including a memory, a transceiver and a processor;
wherein the memory is used to store a computer program; the transceiver is used to send and receive data under control of the processor; and the processor is used to read the computer program in the memory and perform the following operations:
after performing a first hybrid automatic repeat request (HARQ) feedback, performing a first control operation on a DRX downlink retransmission timer corresponding to at least one first HARQ process;
wherein the first HARQ feedback is a HARQ feedback triggered by downlink control information (DCI) scheduling;
the first HARQ process refers to a HARQ process for which a first DRX downlink RTT timer has been started or a HARQ process for which a first DRX downlink retransmission timer has been started, before performing the first HARQ feedback, among HARQ processes corresponding to the first HARQ feedback;
the first control operation includes at least one of the following:
   starting a second DRX retransmission timer in case that the first DRX downlink RTT timer expires and downlink data is not correctly received; or
   maintaining or restarting the first DRX downlink retransmission timer.

Optionally, the HARQ feedback triggered by the DCI scheduling includes at least one of the following:
HARQ feedbacks of all current carriers and all HARQ processes fed back by the UE at one time; or,
HARQ feedbacks of some carriers and/or some HARQ processes fed back by the UE at one time; or,
last HARQ feedback retransmitted by the UE.

Optionally, the starting a second DRX retransmission timer in case that the first DRX downlink RTT timer expires and downlink data is not correctly received, includes:
in case that the first DRX downlink RTT timer has been started before performing the first HARQ feedback, continuing to run the first DRX downlink RTT timer and not starting other DRX downlink RTT timers; in case that the first DRX downlink RTT timer expires and downlink data is not correctly received, starting the second DRX retransmission timer; or,
in case that the first DRX downlink RTT timer has been started before performing the first HARQ feedback, continuing to run the first DRX downlink RTT timer and starting the second DRX downlink RTT timer; in case that the first DRX downlink RTT timer expires and the downlink data is not correctly received, starting the second DRX retransmission timer, and restarting the second DRX retransmission timer in case that the second DRX downlink RTT timer expires.

Optionally, the maintaining or restarting the first DRX downlink retransmission timer, includes:
in case that the first DRX downlink retransmission timer has been started before performing the first HARQ feedback, continuing to run the first DRX downlink retransmission timer and not starting DRX downlink RTT timer corresponding to the first HARQ process; or,
in case that the first DRX downlink retransmission timer has been started before performing the first HARQ feedback, continuing to run the first DRX downlink retransmission timer and starting a third DRX downlink RTT timer; in case that the first DRX downlink retransmission timer expires and downlink data packet is not received correctly, extending duration of DRX downlink retransmission timing; or,
in case that the first DRX downlink retransmission timer has been started before performing the first HARQ feedback and the downlink data packet is not received correctly, restarting the first DRX downlink retransmission timer; or,
in case that the first DRX downlink retransmission timer has been started before performing the first HARQ feedback, restarting the first DRX downlink retransmission timer; or,
in case that the first DRX downlink retransmission timer expires and the downlink data packet is not received correctly, restarting the first DRX downlink retransmission timer.

Optionally, the extending duration of DRX downlink retransmission timing, includes any one of the following:
starting a third DRX downlink retransmission timer in case that the third DRX downlink RTT timer expires;
setting the UE to an active state in a time period between the first DRX downlink retransmission timer and the third DRX downlink retransmission timer, and starting the third DRX downlink retransmission timer when the third DRX downlink RTT timer expires;
extending duration of the first DRX downlink retransmission timer to a starting moment of the third DRX downlink retransmission timer; and starting the third DRX downlink retransmission timer when the third DRX downlink RTT timer expires;
extending the duration of the first DRX downlink retransmission timer to a first duration; wherein the first duration is equal to a sum of the first DRX downlink retransmission timer, the third DRX downlink retransmission timer and a time gap, and the time gap is a time interval between the first DRX downlink retransmission timer and the third DRX downlink retransmission timer.

One embodiment of the present disclosure provides a network device, including a memory, a transceiver and a processor;
wherein the memory is used to store a computer program; the transceiver is used to send and receive data under control of the processor; and the processor is used to read the computer program in the memory and perform the following operations:
after receiving a first hybrid automatic repeat request (HARQ) feedback, performing a first control operation on a DRX downlink retransmission timer corresponding to at least one first HARQ process;
wherein the first HARQ feedback is a HARQ feedback triggered by DCI scheduling;
the first HARQ process refers to a HARQ process for which a first DRX downlink RTT timer has been started or a HARQ process for which a first DRX downlink retransmission timer has been started, before receiving the first HARQ feedback, among HARQ processes corresponding to the first HARQ feedback;
the first control operation includes at least one of the following:
   in case that the first DRX downlink RTT timer expires and the first HARQ feedback includes a first acknowledgment feedback, starting a second DRX retransmission timer, wherein the first acknowledgment feedback is a HARQ negative acknowledgment feedback for the first HARQ process; or,
   maintaining or restarting the first DRX downlink retransmission timer.

Optionally, the HARQ feedback triggered by the DCI scheduling includes at least one of the following:
HARQ feedbacks of all current carriers and all HARQ processes fed back by the UE at one time; or,
HARQ feedbacks of some carriers and/or some HARQ processes fed back by the UE at one time; or,
last HARQ feedback retransmitted by the UE.

Optionally, in case that the first DRX downlink RTT timer expires and the first HARQ feedback includes a first acknowledgment feedback, starting a second DRX retransmission timer, includes:
in case that the first DRX downlink RTT timer has been started before receiving the first HARQ feedback, continuing to run the first DRX downlink RTT timer and not starting other DRX downlink RTT timers;
in case that the first DRX downlink RTT timer expires and the first HARQ feedback includes the first acknowledgment feedback, starting the second DRX retransmission timer; or,
in case that the first DRX downlink RTT timer has been started before receiving the first HARQ feedback, continuing to run the first DRX downlink RTT timer and starting the second DRX downlink RTT timer; in case that the first DRX downlink RTT timer expires and the first HARQ feedback includes the first acknowledgment feedback, starting the second DRX retransmission timer, and restarting the second DRX retransmission timer in case that the second DRX downlink RTT timer expires.

Optionally, the maintaining or restarting the first DRX downlink retransmission timer, includes:
in case that the first DRX downlink retransmission timer has been started before receiving the first HARQ feedback, continuing to run the first DRX downlink retransmission timer and not starting DRX downlink RTT timer corresponding to the first HARQ process; or,
in case that the first DRX downlink retransmission timer has been started before receiving the first HARQ feedback, continuing to run the first DRX downlink retransmission timer and starting a third DRX downlink RTT timer; in case that the first DRX downlink retransmission timer expires and the first HARQ feedback includes the first acknowledgment feedback, extending duration of DRX downlink retransmission timing; or,
in case that the first DRX downlink retransmission timer has been started before receiving the first HARQ feedback and the first HARQ feedback includes the first acknowledgment feedback, restarting the first DRX downlink retransmission timer; or,
in case that the first DRX downlink retransmission timer has been started before receiving the first HARQ feedback, restarting the first DRX downlink retransmission timer; or,
in case that the first DRX downlink retransmission timer expires and the downlink data packet is not received correctly, restarting the first DRX downlink retransmission timer.

Optionally, the extending duration of DRX downlink retransmission timing, includes any one of the following:
starting a third DRX downlink retransmission timer in case that the third DRX downlink RTT timer expires;
setting the UE to an active state in a time period between the first DRX downlink retransmission timer and the third DRX downlink retransmission timer, and starting the third DRX downlink retransmission timer when the third DRX downlink RTT timer expires;
extending duration of the first DRX downlink retransmission timer to a starting moment of the third DRX downlink retransmission timer; and starting the third DRX downlink retransmission timer when the third DRX downlink RTT timer expires;
extending the duration of the first DRX downlink retransmission timer to a first duration; wherein the first duration is equal to a sum of the first DRX downlink retransmission timer, the third DRX downlink retransmission timer and a time gap, and the time gap is a time interval between the first DRX downlink retransmission timer and the third DRX downlink retransmission timer.

One embodiment of the present disclosure provides a discontinuous reception (DRX) timer control device, applied to a user equipment (UE), including:
a first execution unit configured to, after performing a first hybrid automatic repeat request (HARQ) feedback, perform a first control operation on a DRX downlink retransmission timer corresponding to at least one first HARQ process;
wherein the first HARQ feedback is a HARQ feedback triggered by downlink control information (DCI) scheduling;
the first HARQ process refers to a HARQ process for which a first DRX downlink RTT timer has been started or a HARQ process for which a first DRX downlink retransmission timer has been started, before performing the first HARQ feedback, among HARQ processes corresponding to the first HARQ feedback;
the first control operation includes at least one of the following:
   starting a second DRX retransmission timer in case that the first DRX downlink RTT timer expires and downlink data is not correctly received; or
   maintaining or restarting the first DRX downlink retransmission timer.

One embodiment of the present disclosure provides a discontinuous reception (DRX) control device, applied to a network device, including:
a second execution unit configured to, after receiving a first hybrid automatic repeat request (HARQ) feedback, perform a first control operation on a DRX downlink retransmission timer corresponding to at least one first HARQ process;
wherein the first HARQ feedback is a HARQ feedback triggered by DCI scheduling;
the first HARQ process refers to a HARQ process for which a first DRX downlink RTT timer has been started or a HARQ process for which a first DRX downlink retransmission timer has been started, before receiving the first HARQ feedback, among HARQ processes corresponding to the first HARQ feedback;
the first control operation includes at least one of the following:
   in case that the first DRX downlink RTT timer expires and the first HARQ feedback includes a first acknowledgment feedback, starting a second DRX retransmission timer, wherein the first acknowledgment feedback is a HARQ negative acknowledgment feedback for the first HARQ process; or,
   maintaining or restarting the first DRX downlink retransmission timer.

One embodiment of the present disclosure provides a processor-readable storage medium, including a computer program stored thereon; wherein the computer program, when executed by the processor, causes the processor to perform the above method.

The beneficial effects of the above technical solution disclosed in the present disclosure are as follows.

In the above solutions, the discontinuous reception timer control method performs a first control operation on the DRX downlink retransmission timer corresponding to at least one first HARQ process after performing a first HARQ feedback; where the first HARQ feedback is a HARQ feedback triggered by downlink control information (DCI) scheduling; the first HARQ process refers to a HARQ process for which a first DRX downlink RTT timer has been started or a HARQ process for which a first DRX downlink retransmission timer has been started, before performing the first HARQ feedback, among the HARQ processes corresponding to the first HARQ feedback; the first control operation includes at least one of the following: in case that the first DRX downlink RTT timer expires and downlink data is not correctly received, starting a second DRX retransmission timer; or maintaining or restarting the first DRX downlink retransmission timer. In this way, the method can support the UE to send HARQ feedbacks of multiple HARQ processes at the same time according to an instruction of the network device; or, avoid the DRX downlink retransmission timer from being stopped or delayed in case of retransmitting HARQ feedback according to an instruction of the network device, so that for the HARQ process that has started the DRX downlink RTT timer or DRX downlink retransmission timer, the retransmission scheduling can be obtained early, thereby ensuring that the retransmission scheduling can be performed in time. Therefore, the method can effectively solve the problem in the related art that retransmission scheduling cannot be carried out in time caused by the discontinuous reception timer control scheme for special HARQ feedback types.

### BRIEF DESCRIPTION OF THE DRAWINGS

FIG. 1 is a schematic diagram showing interruption of DRX downlink retransmission timer caused by special HARQ feedback in the related art.
FIG. 2 is a schematic diagram showing architecture of a wireless communication system according to an embodiment of the present disclosure;
FIG. 3 is a schematic diagram showing a DRX cycle according to an embodiment of the present disclosure;
FIG. 4 is a first schematic flow chart of a discontinuous reception timer control method according to an embodiment of the present disclosure;
FIG. 5 is a second schematic flow chart of a discontinuous reception timer control method according to an embodiment of the present disclosure;
FIG. 6 is a first schematic diagram of a specific implementation of a discontinuous reception timer control method according to an embodiment of the present disclosure;
FIG. 7 is a second schematic diagram of a specific implementation of a discontinuous reception timer control method according to an embodiment of the present disclosure;
FIG. 8 is a third schematic diagram of a specific implementation of a discontinuous reception timer control method according to an embodiment of the present disclosure;
FIG. 9 is a fourth schematic diagram of a specific implementation of a discontinuous reception timer control method according to an embodiment of the present disclosure;
FIG. 10 is a fifth schematic diagram of a specific implementation of a discontinuous reception timer control method according to an embodiment of the present disclosure;
FIG. 11 is a schematic diagram of a user equipment (UE) according to an embodiment of the present disclosure;
FIG. 12 is a schematic diagram of a network device according to an embodiment of the present disclosure;
FIG. 13 is a first schematic diagram of a discontinuous reception timer control device according to an embodiment of the present disclosure; and
FIG. 14 is a second diagram of a discontinuous reception timer control device according to an embodiment of the present disclosure.

### DETAILED DESCRIPTION

The technical solutions in the embodiments of the present disclosure will be described hereinafter in a clear and complete manner in conjunction with the accompanying drawings of the embodiments of the present disclosure. Obviously, the following embodiments are merely a part of, rather than all of, the embodiments of the present disclosure, and based on these embodiments, a person skilled in the art may obtain the other embodiments, which also fall within the scope of the present disclosure.

The terms "and/or" in the embodiments of the present disclosure are used to describe association relationship between associated objects, and indicate that there may be three relationships, for example, A and/or B means there are three situations, i.e., there is A alone, there are both of A and B, or, there is B alone. The character "/" generally means that relationship between associated objects before and after the character "/" is "or".

The term "plurality" in the embodiments of the present disclosure means two or more, and other quantifiers are similar.

It is explained here that the technical solution provided by the embodiments of the present disclosure can be applicable to a variety of systems, especially 5G systems. For example, the applicable systems can be global system of mobile communication (GSM) system, code division multiple access (CDMA) system, wideband code division multiple access (WCDMA) general packet radio service (GPRS) system, long term evolution (LTE) system, LTE frequency division duplex (FDD) system, LTE time division duplex (TDD) system, long term evolution advanced (LTE-A) system, universal mobile telecommunication system (UMTS), worldwide interoperability for microwave access (WiMAX) system, fifth generation mobile communication (5th-Generation, 5G) new radio (NR) system, etc. These various systems include user equipment and network equipment. The system can also include core network parts, such as the Evolved Packet System (EPS), 5G System (5GS), etc.

FIG. 2 is a schematic diagram showing architecture of a wireless communication system according to an embodiment of the present disclosure. The wireless communication system includes a terminal device and a network device. The terminal device may be referred to as a terminal for short, which is not limited here.

The terminal involved in the embodiments of the present disclosure is a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as User Equipment (UE). A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal device may also be called as system, subscriber unit, subscriber station, mobile station, mobile, remote station, remote terminal, access terminal, user terminal, user agent or user device, which will not be particularly defined herein.

The network device involved in the embodiments of the present disclosure may be a base station which includes a plurality of cells providing services for the terminal. Depending on different application scenarios, the base station is called as an access point, a device in an access network in communication with the wireless terminal device through one or more sectors on an air interface, or any other name. The network device is used to exchange a received air frame with an Internet Protocol (IP) packet, and it serves as a router between the wireless terminal device and the other part of the access network. The other part of the access network includes an IP communication network. The network device may further coordinate attribute management on the air interface. For example, the network device involved in the embodiments of the present disclosure is a Base Transceiver Station (BTS) in the GSM or CDMA system, a NodeB in the WCDMA system, an evolutional Node B (eNB, or e-NodeB) in the LTE system, a 5Gbase station (gNB) in 5G network architecture (next generation system), a Home evolved Node B (HeNB), a relay node, a femto, or a pico, which will not be particularly defined herein. In some network structures, the network device includes a Centralized Unit (CU) and a Distributed Unit (DU), which may be geographically separated from each other.

Multi Input Multi Output (MIMO) transmission is performed between the network device and the terminal each with one or more antennae, and the MIMO transmission is Single User MIMO (SU-MIMO) or Multiple User MIMO (MU-MIMO). Depending on the form of an antenna combination and the quantity of antennae, the MIMO transmission may be 2D-MIMO, 3D-MIMO, FD-MIMO or massive-MIMO, and it may also be diversity transmission, precoding transmission or beam-forming transmission.

Contents involved in the solution provided in the embodiment of the present disclosure are introduced hereinafter.

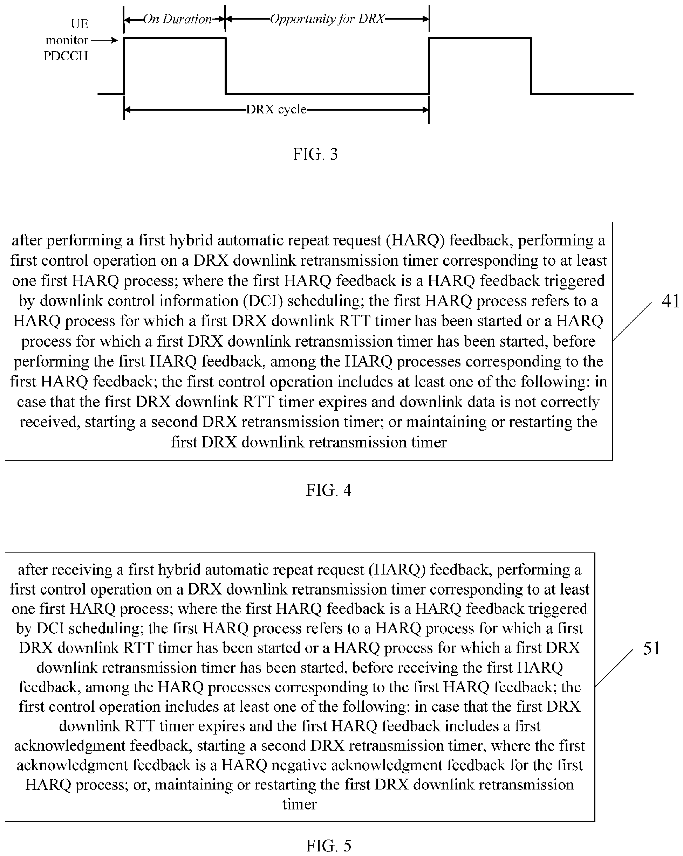

DRX refers to discontinuous reception mechanism of a UE in a connected state. This mechanism allows the UE to periodically enter a sleep state at certain moments and not monitor Physical downlink control channel (PDCCH) sub-frame. When it is needed to monitor PDCCH sub-frame, the UE wakes up from the sleep state, so that the UE can save power. The DRX mechanism (DRX cycle) in the connected state is shown in FIG. 3, a time period labeled with "on duration" is fixed time period during which the UE monitors downlink PDCCH sub-frame at a starting point of the DRX cycle. During this time period, the UE is in an awake state. A time period labeled with "opportunity for DRX" is DRX sleep time if no other timer is started; that is, a time period during which the UE enters the sleep state and does not monitor the PDCCH sub-frame in order to save power.

In addition, DRX operation mainly involves: drx-onDurationTimer (DRX duration timer), drx-InactivityTimer (DRX inactivity timer), drx-RetransmissionTimerDL (DRX downlink retransmission timer), drx-RetransmissionTimerUL (DRX uplink retransmission timer), drx-HARQ-RTT-TimerDL (DRX downlink round-trip-time (RTT) timer) and drx-HARQ-RTT-TimerUL (per UL HARQ process) (DRX uplink RTT timer). During operation of the drx-onDurationTimer, drx-Inactivity Timer (DRX inactivity timer), drx-RetransmissionTimerDL (DRX downlink retransmission timer) and drx-RetransmissionTimerUL (DRX uplink retransmission timer), the UE is in DRX inactive state and needs to monitor PDCCH scheduling of a base station. During operation of the drx-HARQ-RTT-TimerDL and drx-HARQ-RTT-TimerUL, the UE is in DRX inactive state and does not need to monitor the PDCCH scheduling of the base station.

This solution is mainly related to drx-HARQ-RTT-TimerDL and drx-RetransmissionTimerDL. Both timers run for each HARQ process. The specific operation mode includes: when the UE receives downlink data sent by the base station and sends HARQ feedback, drx-HARQ-RTT-TimerDL is started. When the drx-HARQ-RTT-TimerDL is started, the drx-RetransmissionTimerDL of the corresponding HARQ process is stopped; when the drx-HARQ-RTT-TimerDL expires, if the UE does not correctly receive downlink transmission of this HARQ process, drx-RetransmissionTimerDL is started. In this way, the base station and the UE have the same understanding of when the UE is in the DRX active state and the inactive state, and the base station can schedule the UE during the operation of drx-RetransmissionTimerDL.

In addition, 5G introduces new HARQ feedback types, including:
(1) Type-3 HARQ-ACK codebook, i.e., feedback of all carriers and all HARQ processes, that the UE is indicated, by downlink control information (DCI) carried in PDCCH, to send at once;
(2) Enhanced Type-3 HARQ-ACK codebook, which can be configured through the network; the base station uses DCI to instruct the UE to send HARQ feedback only for some carriers and/or some HARQ processes;
(3) the base station uses DCI to instruct the UE to retransmit last HARQ feedback codebook.

From the above, it is necessary to solve how to control the DRX timer (including DRX downlink RTT timer and DRX downlink retransmission timer) after the UE sends a special state Hybrid automatic repeat request (HARQ) feedback during discontinuous reception (DRX) operation, so that the base station and the UE have a consistent understanding of the DRX state, thereby enabling the base station to schedule data retransmission in time.

Based on the above, embodiments of the present disclosure provide a discontinuous reception timer control method, device, UE and network device to solve the problem in the related art that retransmission scheduling cannot be carried out in time caused by the discontinuous reception timer control scheme for special HARQ feedback types. The method, device, UE and network device are based on the same application concept. Since the principles of solving the problem by the method, device, UE and network device are similar, the implementation of the method, device, UE and network device can refer to each other, and the repeated parts will not be repeated.

A discontinuous reception timer control method provided by one embodiment of the present disclosure is applied to a user equipment (UE), as shown in FIG. 4, and includes:
Step 41: after performing a first hybrid automatic repeat request (HARQ) feedback, performing a first control operation on a DRX downlink retransmission timer corresponding to at least one first HARQ process; where the first HARQ feedback is a HARQ feedback triggered by downlink control information (DCI) scheduling; the first HARQ process refers to a HARQ process for which a first DRX downlink RTT timer has been started or a HARQ process for which a first DRX downlink retransmission timer has been started, before performing the first HARQ feedback, among the HARQ processes corresponding to the first HARQ feedback; the first control operation includes at least one of the following: in case that the first DRX downlink RTT timer expires and downlink data is not correctly received, starting a second DRX retransmission timer; or maintaining or restarting the first DRX downlink retransmission timer.

The "correctly received" may mean that the UE can correctly decode downlink data transmitted in the process, but is not limited thereto.

The discontinuous reception timer control method provided by the embodiment of the present disclosure performs a first control operation on the DRX downlink retransmission timer corresponding to at least one first HARQ process after performing a first HARQ feedback; where the first HARQ feedback is a HARQ feedback triggered by downlink control information (DCI) scheduling; the first HARQ process refers to a HARQ process for which a first DRX downlink RTT timer has been started or a HARQ process for which a first DRX downlink retransmission timer has been started, before performing the first HARQ feedback, among the HARQ processes corresponding to the first HARQ feedback; the first control operation includes at least one of the following: in case that the first DRX downlink RTT timer expires and downlink data is not correctly received, starting a second DRX retransmission timer; or maintaining or restarting the first DRX downlink retransmission timer. In this way, the method can support the UE to send HARQ feedbacks of multiple HARQ processes at the same time according to an instruction of the network device; or, avoid the DRX downlink retransmission timer from being stopped or delayed in case of retransmitting HARQ feedback according to an instruction of the network device, so that for the HARQ process that has started the DRX downlink RTT timer or DRX downlink retransmission timer, the retransmission scheduling can be obtained early, thereby ensuring that the retransmission scheduling can be performed in time. Therefore, the method can effectively solve the problem in the related art that retransmission scheduling cannot be carried out in time caused by the discontinuous reception timer control scheme for special HARQ feedback types.

The HARQ feedback triggered by the DCI scheduling includes at least one of the following: HARQ feedbacks of all current carriers and all HARQ processes fed back by the UE at one time (which is specifically corresponding to that DCI indicates to feedback Type-3 HARQ-ACK code on PUCCH); or HARQ feedbacks of some carriers and/or some HARQ processes fed back by the UE at one time (which is specifically corresponding to that DCI indicates to feedback enhanced Type-3 HARQ-ACK code on PUCCH); or the last HARQ feedback retransmitted by the UE.

In the embodiment of the present disclosure, when the first DRX downlink RTT timer expires and the downlink data is not correctly received, starting the second DRX retransmission timer, includes: in case that the first DRX downlink RTT timer has been started before performing the first HARQ feedback, continuing to run the first DRX downlink RTT timer and not starting other DRX downlink RTT timers; in case that the first DRX downlink RTT timer expires and the downlink data is not correctly received, starting the second DRX retransmission timer; or, in case that the first DRX downlink RTT timer has been started before performing the first HARQ feedback, continuing to run the first DRX downlink RTT timer and starting the second DRX downlink RTT timer; in case that the first DRX downlink RTT timer expires and the downlink data is not correctly received, starting the second DRX retransmission timer, and restarting the second DRX retransmission timer in case that the second DRX downlink RTT timer expires.

Regarding "continuing to run", it can also be understood as "continuing to maintain", which is not limited here. Regarding "not starting other DRX downlink RTT timers", it may mean not starting other DRX downlink RTT timers for the first HARQ process except the first DRX downlink RTT timer; it may also include not restarting the first DRX downlink RTT timer. Or, "not starting other DRX downlink RTT timers" can also be understood as: not starting DRX downlink RTT timer corresponding to the first HARQ feedback, which is not limited here.

The maintaining or restarting the first DRX downlink retransmission timer, includes: in case that the first DRX downlink retransmission timer has been started before performing the first HARQ feedback, continuing to run the first DRX downlink retransmission timer and not starting the DRX downlink RTT timer corresponding to the first HARQ process; or, in case that the first DRX downlink retransmission timer has been started before performing the first HARQ feedback, continuing to run the first DRX downlink retransmission timer and starting a third DRX downlink RTT timer; in case that the first DRX downlink retransmission timer expires and downlink data packet is not received correctly, extending duration of DRX downlink retransmission timing; or, in case that the first DRX downlink retransmission timer has been started before performing the first HARQ feedback and the downlink data packet is not received correctly, restarting the first DRX downlink retransmission timer.

It is to be noted that, optionally, the maintaining or restarting the first DRX downlink retransmission timer may also include the following solutions:
In case that the first DRX downlink retransmission timer has been started before performing the first HARQ feedback, restarting the first DRX downlink retransmission timer;
or, when the first DRX downlink retransmission timer expires and the downlink data packet is not correctly received, starting the DRX downlink retransmission timer.

The application end of the solution in this implementation is not limited here, that is, this implementation can be applied to a UE or a network device, and this implementation will not be repeated in the implementation of the network device.

In the embodiment of the present disclosure, the extending duration of DRX downlink retransmission timing, includes any one of the following: (1) starting a third DRX downlink retransmission timer in case that the third DRX downlink RTT timer expires; (2) setting the UE to an active state in a time period between the first DRX downlink retransmission timer and the third DRX downlink retransmission timer, and starting the third DRX downlink retransmission timer when the third DRX downlink RTT timer expires; (3) extending duration of the first DRX downlink retransmission timer to a starting moment of the third DRX downlink retransmission timer; and starting the third DRX downlink retransmission timer when the third DRX downlink RTT timer expires; (4) extending the duration of the first DRX downlink retransmission timer to a first duration; the first duration is equal to a sum of the first DRX downlink retransmission timer, the third DRX downlink retransmission timer and a time gap, and the time gap is a time interval between the first DRX downlink retransmission timer and the third DRX downlink retransmission timer.

In the embodiment of the present disclosure, the first DRX downlink retransmission timer expires first, and the started third DRX downlink RTT timer expires afterwards, with a time gap therebetween. The started third DRX downlink RTT Timer is used to start the third DRX downlink retransmission timer.

In addition, during operation of the first DRX downlink retransmission timer and/or the third DRX downlink retransmission timer, the UE enters an active state and monitors PDCCH scheduling.

One embodiment of the present disclosure further provides a discontinuous reception timer control method, which is applied to a network device, as shown in FIG. 5, and includes:
Step 51: after receiving a first hybrid automatic repeat request (HARQ) feedback, performing a first control operation on a DRX downlink retransmission timer corresponding to at least one first HARQ process; where the first HARQ feedback is a HARQ feedback triggered by DCI scheduling; the first HARQ process refers to a HARQ process for which a first DRX downlink RTT timer has been started or a HARQ process for which a first DRX downlink retransmission timer has been started, before receiving the first HARQ feedback, among the HARQ processes corresponding to the first HARQ feedback; the first control operation includes at least one of the following: in case that the first DRX downlink RTT timer expires and the first HARQ feedback includes a first acknowledgment feedback, starting a second DRX retransmission timer, where the first acknowledgment feedback is a HARQ negative acknowledgment feedback for the first HARQ process; or, maintaining or restarting the first DRX downlink retransmission timer.

The "receiving the first HARQ feedback" may specifically include: receiving the first HARQ feedback sent by the UE; the "first HARQ feedback includes a first response feedback" corresponds to "not correctly received" on the UE side, and "correctly received" may mean that the UR can correctly decode downlink data transmitted in the process, but is not limited to this.

The discontinuous reception timer control method provided by the embodiment of the present disclosure performs a first control operation on the DRX downlink retransmission timer corresponding to at least one first HARQ process after receiving a first HARQ feedback; where the first HARQ feedback is a HARQ feedback triggered by downlink control information (DCI) scheduling; the first HARQ process refers to a HARQ process for which a first DRX downlink RTT timer has been started or a HARQ process for which a first DRX downlink retransmission timer has been started, before receiving the first HARQ feedback, among the HARQ processes corresponding to the first HARQ feedback; the first control operation includes at least one of the following: in case that the first DRX downlink RTT timer expires and the first HARQ feedback includes a first acknowledgment feedback, starting a second DRX retransmission timer, where the first acknowledgment feedback is a HARQ negative acknowledgment feedback for the first HARQ process; or, maintaining or restarting the first DRX downlink retransmission timer. In this way, the method can support the UE to send HARQ feedbacks of multiple HARQ processes at the same time according to an instruction of the network device; or, avoid the DRX downlink retransmission timer from being stopped or delayed in case of retransmitting HARQ feedback according to an instruction of the network device, so that for the HARQ process that has started the DRX downlink RTT timer or DRX downlink retransmission timer, the retransmission scheduling can be obtained early, thereby ensuring that the retransmission scheduling can be performed in time (that is, the network device can schedule data retransmission in time). Therefore, the method can effectively solve the problem in the related art that retransmission scheduling cannot be carried out in time caused by the discontinuous reception timer control scheme for special HARQ feedback types.

The HARQ feedback triggered by the DCI scheduling includes at least one of the following: HARQ feedbacks of all current carriers and all HARQ processes fed back by the UE at one time (which is specifically corresponding to that DCI indicates to feedback Type-3 HARQ-ACK code on PUCCH); or HARQ feedbacks of some carriers and/or some HARQ processes fed back by the UE at one time (which is specifically corresponding to that DCI indicates to feedback enhanced Type-3 HARQ-ACK code on PUCCH); or the last HARQ feedback retransmitted by the UE.

In the embodiment of the present disclosure, when the first DRX downlink RTT timer expires and the first HARQ feedback includes a first acknowledgment feedback, starting the second DRX retransmission timer, includes: in case that the first DRX downlink RTT timer has been started before receiving the first HARQ feedback, continuing to run the first DRX downlink RTT timer and not starting other DRX downlink RTT timers; in case that the first DRX downlink RTT timer expires and the first HARQ feedback includes the first acknowledgment feedback, starting the second DRX retransmission timer; or, in case that the first DRX downlink RTT timer has been started before receiving the first HARQ feedback, continuing to run the first DRX downlink RTT timer and starting the second DRX downlink RTT timer; in case that the first DRX downlink RTT timer expires and the first HARQ feedback includes the first acknowledgment feedback, starting the second DRX retransmission timer, and restarting the second DRX retransmission timer in case that the second DRX downlink RTT timer expires.

Regarding "continuing to run", it can also be understood as "continuing to maintain", which is not limited here. Regarding "not starting other DRX downlink RTT timers", it may mean not starting other DRX downlink RTT timers for the first HARQ process except the first DRX downlink RTT timer; it may also include not restarting the first DRX downlink RTT timer. Or, "not starting other DRX downlink RTT timers" can also be understood as: not starting DRX downlink RTT timer corresponding to the first HARQ feedback, which is not limited here.

The maintaining or restarting the first DRX downlink retransmission timer, includes: in case that the first DRX downlink retransmission timer has been started before receiving the first HARQ feedback, continuing to run the first DRX downlink retransmission timer and not starting the DRX downlink RTT timer corresponding to the first HARQ process; or, in case that the first DRX downlink retransmission timer has been started before receiving the first HARQ feedback, continuing to run the first DRX downlink retransmission timer and starting a third DRX downlink RTT timer; in case that the first DRX downlink retransmission timer expires and the first HARQ feedback includes the first acknowledgment feedback, extending duration of DRX downlink retransmission timing; or, in case that the first DRX downlink retransmission timer has been started before receiving the first HARQ feedback and the first HARQ feedback includes the first acknowledgment feedback, restarting the first DRX downlink retransmission timer.

In the embodiment of the present disclosure, the extending duration of DRX downlink retransmission timing, includes any one of the following: (1) starting a third DRX downlink retransmission timer in case that the third DRX downlink RTT timer expires; (2) setting the UE to an active state in a time period between the first DRX downlink retransmission timer and the third DRX downlink retransmission timer, and starting the third DRX downlink retransmission timer when the third DRX downlink RTT timer expires; (3) extending duration of the first DRX downlink retransmission timer to a starting moment of the third DRX downlink retransmission timer; and starting the third DRX downlink retransmission timer when the third DRX downlink RTT timer expires; (4) extending the duration of the first DRX downlink retransmission timer to a first duration; the first duration is equal to a sum of the first DRX downlink retransmission timer, the third DRX downlink retransmission timer and a time gap, and the time gap is a time interval between the first DRX downlink retransmission timer and the third DRX downlink retransmission timer.

The "UE" in the above option (2) may specifically be a UE that sends the first HARQ feedback, which is not limited here.

In the embodiment of the present disclosure, the first DRX downlink retransmission timer expires first, and the started third DRX downlink RTT timer expires afterwards, with a time gap therebetween. The started third DRX downlink RTT Timer is used to start the third DRX downlink retransmission timer.

In addition, during operation of the first DRX downlink retransmission timer and/or the third DRX downlink retransmission timer, the UE enters an active state and the network device can send a PDCCH scheduling instruction (i.e., a scheduling command) to the UE.

The discontinuous reception timer control method provided in the embodiment of the present disclosure is described hereinafter by taking an example of a base station as an example of a network device.

In view of the above technical problems, one embodiment of the present disclosure provides a discontinuous reception timer control method, which mainly involves: after the UE sends a special type of HARQ feedback (corresponding to the above first HARQ feedback), the DRX downlink retransmission timer (drx-RetransmissionTimerDL) in the HARQ process (corresponding to the above first HARQ process) corresponding to the HARQ feedback is specially processed (corresponding to the above first control operation), so that the UE can monitor PDCCH scheduling commands of the base station in a timely manner (or as soon as possible) (that is, the UE can receive the PDCCH in a timely manner (or as soon as possible)).

Specifically, the present solution involves the following contents.
1. Special type HARQ feedback includes at least one of the following HARQ feedbacks triggered by DCI scheduling:
   (Type 1) The base station uses DCI to instruct the UE to feed back HARQ feedbacks of all current carriers and all HARQ processes at one time;
   (Type 2) The base station uses DCI to instruct the UE to feed back HARQ feedbacks of a specified carrier (corresponding to the above some HARQ processes) and/or a specified HARQ process (corresponding to the above some HARQ processes) at one time;
   (Type 3) The base station uses DCI to instruct the UE to feed back last HARQ feedback.
2. Special processing of the DRX downlink retransmission timer in the HARQ process corresponding to the HARQ feedback includes any of the following:
   (1) If the DRX downlink RTT timer (RTT timer 1, corresponding to the above first DRX downlink RTT timer) has been started before performing the special type HARQ feedback:
      1) After the UE sends the special type HARQ feedback, the UE does not start the DRX downlink RTT timer (corresponding to not starting other DRX downlink RTT timers mentioned above), continues to maintain the RTT timer 1; and when the RTT timer 1 expires and downlink data is not correctly received, starts the DRX retransmission timer (corresponding to the above second DRX retransmission timer); or
      2) After the UE sends the special type HARQ feedback, the UE starts the DRX downlink RTT timer (RTT timer 2, corresponding to the above second DRX downlink RTT timer), and continues to maintain the RTT timer 1; when the RTT timer 1 expires and the downlink data is not received correctly, starts the DRX retransmission timer (corresponding to the above second DRX retransmission timer); when the RTT timer 2 expires, restarting the DRX retransmission timer (corresponding to the above second DRX retransmission timer).
   (2) If the DRX downlink retransmission timer (retransmission timer 1, corresponding to the above first DRX downlink retransmission timer) has been started before performing the special type HARQ feedback:
      1) After the UE sends the special type HARQ feedback, the UE does not start the DRX downlink RTT timer (corresponding to not starting the DRX downlink RTT timer corresponding to the first HARQ process) and continues to run the retransmission timer 1. During operation of the retransmission timer 1 (i.e., before the retransmission timer 1 expires), the UE enters an active state and monitors the PDCCH scheduling; or
      2) After the UE sends the special type HARQ feedback, the UE starts the DRX downlink RTT timer (corresponding to the above third DRX downlink RTT timer), but does not stop the retransmission timer 1 (corresponding to continuing to run the first DRX downlink retransmission timer mentioned above); when the RTT timer (corresponding to the above third DRX downlink RTT timer) expires, if downlink data packet of the HARQ process is not received correctly, starts the DRX downlink retransmission timer (retransmission timer 2, corresponding to the above third DRX downlink retransmission timer); corresponding to the above situation when the third DRX downlink RTT timer expires, starts the third DRX downlink retransmission timer. Optionally, the UE is also set to an active state during a time period between expiration of the retransmission timer 1 and starting of the retransmission timer 2 (corresponding to the above that the UE is set to an active state during a time period between the first DRX downlink retransmission timer and the third DRX downlink retransmission timer). Specifically, the retransmission timer 1 may be extended to a starting moment of the retransmission timer 2 (corresponding to the above that duration of the first DRX downlink retransmission timer extends to the starting moment of the third DRX downlink retransmission timer), or the duration of the DRX downlink retransmission timer may be extended to a sum of the retransmission timer 1+retransmission timer 2+the time interval between the retransmission timers 1 and 2 (corresponding to the above that the duration of the first DRX downlink retransmission timer extends to the first length). During the operation of the retransmission timer 1 and the retransmission timer 2, the UE enters an active state and monitors PDCCH scheduling; or
      3) After the UE sends the special type HARQ feedback, if downlink data packet of the HARQ process is not received correctly, the DRX downlink retransmission timer (corresponding to the above first DRX downlink retransmission timer) is restarted, that is, the DRX downlink retransmission timer is run from an initial value.

The present disclosure takes into account that the base station needs to maintain a timer, otherwise the base station does not know when the UE is in the active period, and thus does not know when to send a scheduling command. Therefore, the base station can perform timer control operations similar to those of the UE, which will not be repeated here.

The following is a specific example of the solution provided by the embodiment of the present disclosure.

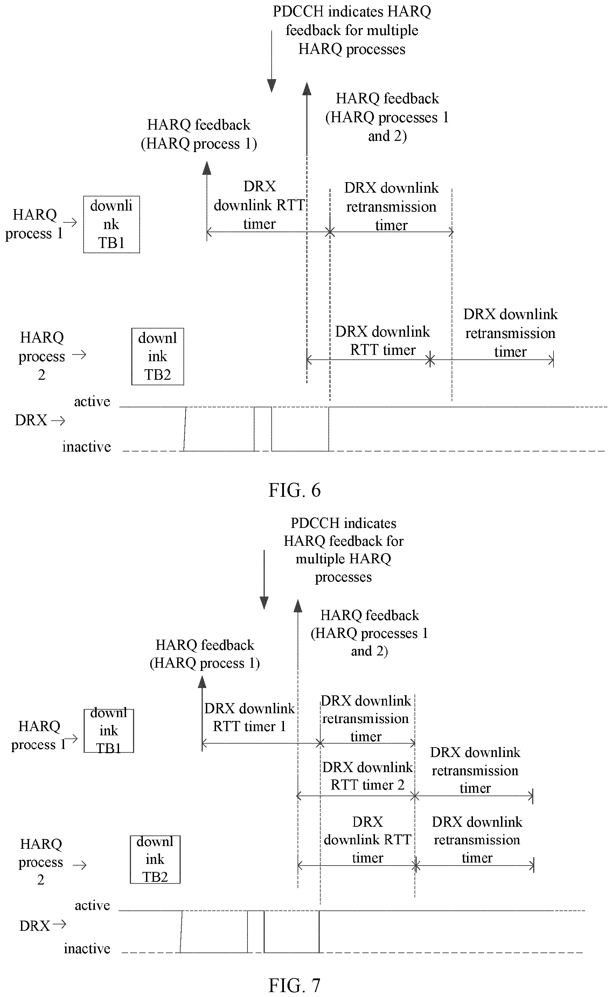

Example 1: before the UE sends a special type HARQ feedback, the UE starts a DRX downlink RTT timer (1) of a HARQ process 1;
UE side:
   Step 1: receiving downlink transmission of HARQ process 1 and downlink transmission of HARQ process 2; when the HARQ process 1 has a determined HARQ feedback resource, then sending a HARQ feedback for the HARQ process 1, and starting a DRX downlink RTT timer of the HARQ process 1.
   Step 2: after receiving DCI (indicating transmission of a special type HARQ feedback) carried on PDCCH from the base station, sending the HARQ feedback; as shown in FIG. 6, where the UE feeds back the HARQ feedback for the HARQ process 1 and the HARQ process 2, and the UE does not start the DRX downlink RTT timer of the HARQ process 1 (corresponding to the above that continuing to run the first DRX downlink RTT timer and not starting other DRX downlink RTT timers), and only starts the DRX downlink RTT timer of the HARQ process 2.
   Step 3: when the DRX downlink RTT timer of the HARQ process 1 expires, starting the DRX retransmission timer; when the DRX downlink RTT timer of the HARQ process 2 expires, starting the DRX retransmission timer; where during operation of any DRX retransmission timer, the UE is in the active state.
Base station side:
   Step 1: sending downlink transmission of HARQ process 1 and downlink transmission of HARQ process 2; when the HARQ process 1 has a determined HARQ feedback resource, receiving HARQ feedback for the HARQ process 1, and starting the DRX downlink RTT timer of the HARQ process 1.
   Step 2: sending DCI (indicating transmission of special type HARQ feedback) carried on PDCCH, receiving HARQ feedback; as shown in FIG. 6, where the UE feeds back HARQ feedback for the HARQ process 1 and the HARQ process 2, not starting the DRX downlink RTT timer of the HARQ process 1 (corresponding to the above that continuing to run the first DRX downlink RTT timer and not starting other DRX downlink RTT timers), and only starting the DRX downlink RTT timer of the HARQ process 2.
   Step 3: when the DRX downlink RTT timer of the HARQ process 1 expires, starting the DRX retransmission timer; when the DRX downlink RTT timer of the HARQ process 2 expires, starting the DRX retransmission timer; where during operation of any DRX retransmission timer, the base station can send PDCCH to the UE.

In the figure of this example, the base station instructs the UE to send HARQ feedback (i.e., the above special type HARQ feedback types 1 and 2) of multiple processes at one time as an example. When the base station instructs the UE to send HARQ feedback retransmission (i.e., the special type HARQ feedback type 3), the operation is the same and will not be repeated here.

Example 2: before the UE sends a special type HARQ feedback, the UE starts a DRX downlink RTT timer (2) of a HARQ process 1;
UE side:
   Step 1: receiving downlink transmission of HARQ process 1 and downlink transmission of HARQ process 2; when the HARQ process 1 has a determined HARQ feedback resource, then sending HARQ feedback for the HARQ process 1, and starting the DRX downlink RTT timer (RTT timer 1) of the HARQ process 1.
   Step 2: after receiving DCI (indicating transmission of special type HARQ feedback) carried on PDCCH from the base station, sending HARQ feedback; as shown in FIG. 7, where the UE feeds back HARQ feedback for the HARQ process 1 and the HARQ process 2, and starts another DRX downlink RTT timer (RTT timer 2) for the HARQ process 1, and starts (a corresponding) DRX downlink RTT timer for the HARQ process 2.
   Step 3: when the RTT timer 1 of the HARQ process 1 expires, starting the DRX retransmission timer; when the RTT timer 2 expires, if downlink transmission is still not received successfully, restarting the DRX retransmission timer (i.e., starting the DRX retransmission timer when RTT timer 1 expires); when the DRX downlink RTT timer of the HARQ process 2 expires, starting (a corresponding) DRX retransmission timer; where during operation of any DRX retransmission timer, the UE is in the active state. In this example, only one DRX retransmission timer is maintained for one HARQ process, as shown in FIG. 7, The first retransmission timer of the HARQ process 1 is stopped when the second retransmission timer is started (i.e., restarting the DRX retransmission timer).
Base station side:
   Step 1: sending downlink transmission of HARQ process 1 and downlink transmission of HARQ process 2; when the HARQ process 1 has a determined HARQ feedback resource, then receiving HARQ feedback for the HARQ process 1 and starting the DRX downlink RTT timer (RTT timer 1) of the HARQ process 1.
   Step 2: sending DCI (indicating transmission of special type HARQ feedback) carried on PDCCH, receiving HARQ feedback; as shown in FIG. 7, where the UE feeds back HARQ feedback for the HARQ process 1 and the HARQ process 2, starts another DRX downlink RTT timer (RTT timer 2) for the HARQ process 1, and starts (a corresponding) DRX downlink RTT timer for the HARQ process 2.
   Step 3: when the RTT timer 1 of the HARQ process 1 expires, starting the DRX retransmission timer; when the RTT timer 2 expires, if downlink transmission is still not received successfully, restarting the DRX retransmission timer (i.e., starting the DRX retransmission timer when the RTT timer 1 expires); when the DRX downlink RTT timer of the HARQ process 2 expires, starting (a corresponding) DRX retransmission timer. During operation of any DRX retransmission timer, the base station can send PDCCH to the UE.

In the figure of this example, the base station instructs the UE to send HARQ feedback (i.e., the above special type HARQ feedback types 1 and 2) of multiple processes at one time as an example. When the base station instructs the UE to send HARQ feedback retransmission (i.e., the special type HARQ feedback type 3), the operation is the same and will not be repeated here.

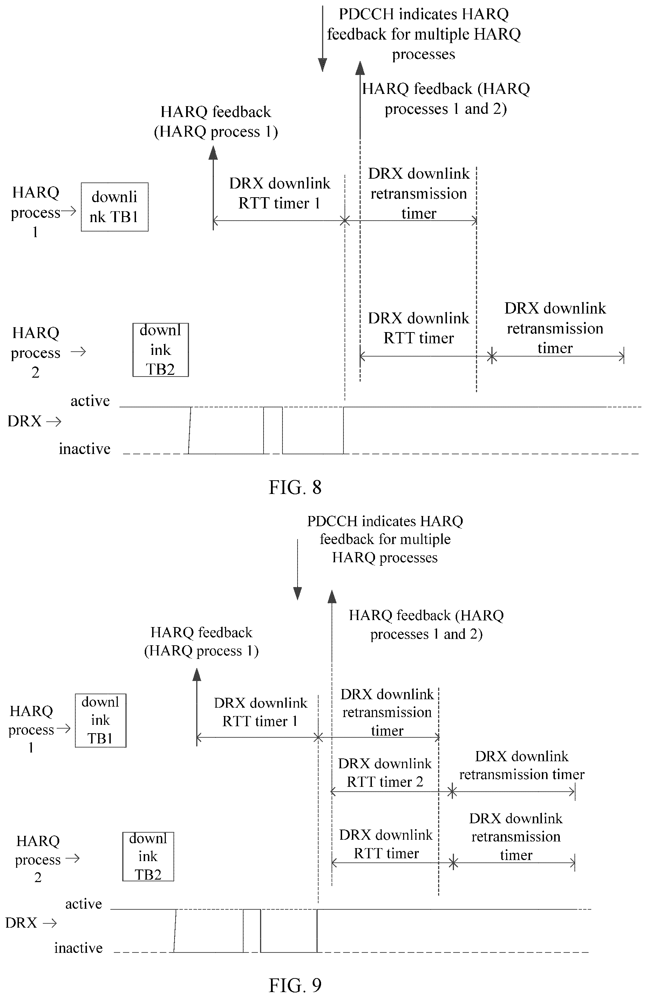

Example 3: before the UE sends a special type HARQ feedback, the UE starts a DRX downlink retransmission timer (1) of a HARQ process 1.
UE side:
   Step 1: receiving downlink transmission of HARQ process 1 and downlink transmission of HARQ process 2; when the HARQ process 1 has a determined HARQ feedback resource, sending HARQ feedback for the HARQ process 1, and starting the DRX downlink RTT timer of the HARQ process 1; when the DRX downlink RTT timer expires and downlink data is not correctly received, starting the DRX downlink retransmission timer of the process 1.
   Step 2: after receiving the DCI (indicating transmission of a special type HARQ feedback) carried on PDCCH from the base station, sending HARQ feedback; as shown in FIG. 8, where the UE feeds back the HARQ feedback for the HARQ process 1 and the HARQ process 2, and the UE does not start the DRX downlink RTT timer of the HARQ process 1 (corresponding to the above that not starting the DRX downlink RTT timer corresponding to the first HARQ process), and only starts the DRX downlink RTT timer of the HARQ process 2.
   Step 3: continuing to run the DRX retransmission timer of the HARQ process 1; when the DRX downlink RTT timer of the HARQ process 2 expires, starting the DRX retransmission timer. During operation of any DRX retransmission timer, the UE is in an active state and can receive PDCCH commands from the base station.
Base station side:
   Step 1: sending downlink transmission of HARQ process 1 and downlink transmission of HARQ process 2; when the HARQ process 1 has a determined HARQ feedback resource, receiving HARQ feedback for the HARQ process 1; starting the DRX downlink RTT timer of the HARQ process 1; when the DRX downlink RTT timer expires and downlink data is not correctly received, starting the DRX downlink retransmission timer of the process 1.
   Step 2: sending DCI (indicating transmission of special type HARQ feedback) carried on PDCCH, receiving HARQ feedback; as shown in FIG. 8, where the UE feeds back HARQ feedback for the HARQ process 1 and the HARQ process 2, does not start the DRX downlink RTT timer of the HARQ process 1 (corresponding to the above that not starting the DRX downlink RTT timer corresponding to the first HARQ process), and only starts the DRX downlink RTT timer of the HARQ process 2.
   Step 3: continuing to run the DRX retransmission timer of the HARQ process 1; when the DRX downlink RTT timer of the HARQ process 2 expires, starting the DRX retransmission timer. During operation of any DRX retransmission timer, the base station can send a PDCCH scheduling command to the UE.

In the figure of this example, the base station instructs the UE to send HARQ feedback (i.e., the above special type HARQ feedback types 1 and 2) of multiple processes at one time as an example. When the base station instructs the UE to send HARQ feedback retransmission (i.e., the special type HARQ feedback type 3), the operation is the same and will not be repeated here.

Example 4: before the UE sends the special type HARQ feedback, the UE starts a DRX downlink retransmission timer (2) of a HARQ process 1;
UE side:
   Step 1: receiving downlink transmission of HARQ process 1 and downlink transmission of HARQ process 2; when the HARQ process 1 has a determined HARQ feedback resource, sending HARQ feedback for the HARQ process 1, starting the DRX downlink RTT timer of the HARQ process 1; and when the DRX downlink RTT timer expires and downlink data is not correctly received, starting the DRX downlink retransmission timer (retransmission timer 1) of the HARQ process 1.
   Step 2: after receiving DCI (indicating transmission of a special type HARQ feedback) carried on PDCCH from the base station, sending HARQ feedback; as shown in FIG. 9, where the UE feeds back HARQ feedback for HARQ process 1 and HARQ process 2, and starts the DRX downlink RTT timer for the HARQ process 1 and the DRX downlink RTT timer for the HARQ process 2.
   Step 3: continuing to run the DRX retransmission timer (retransmission timer 1) of the HARQ process 1; when the DRX downlink RTT timer of the HARQ process 1 expires, starting the DRX retransmission timer (retransmission timer 2); when the DRX downlink RTT timer of the HARQ process 2 expires, starting (a corresponding) DRX retransmission timer. During operation of any DRX retransmission timer, the UE is in an active state and can receive PDCCH commands from the base station. Optionally, the UE can extend the DRX downlink retransmission timer of the ARQ process 1 to: the retransmission timer 1+retransmission timer 2+the length of the time interval between retransmission timers 1 and 2, without specifying two retransmission timers for one HARQ process.
Base station side:
   Step 1: sending downlink transmission of HARQ process 1 and downlink transmission of HARQ process 2; when the HARQ process 1 has a determined HARQ feedback resource, receiving HARQ feedback for the HARQ process 1, starting the DRX downlink RTT timer of the HARQ process 1; when the DRX downlink RTT timer expires and downlink data is not correctly received, starting the DRX downlink retransmission timer (retransmission timer 1) of the process 1.
   Step 2: sending DCI (indicating transmission of a special type HARQ feedback) carried by PDCCH, receiving HARQ feedback; as shown in FIG. 9, where the UE feeds back HARQ feedback for the HARQ process 1 and the HARQ process 2, starts the DRX downlink RTT timer of the HARQ process 1, and starts the DRX downlink RTT timer of the HARQ process 2.
   Step 3: continuing to run the DRX retransmission timer (retransmission timer 1) of the HARQ process 1; when the DRX downlink RTT timer of the HARQ process 1 expires, starting the DRX retransmission timer (retransmission timer 2); when the DRX downlink RTT timer of the HARQ process 2 expires, starting (a corresponding) DRX retransmission timer. During operation of any DRX retransmission timer, the base station can send a PDCCH scheduling command to the UE. Optionally, duration of the DRX downlink retransmission timer of the HARQ process 1 can be extended to: retransmission timer 1+retransmission timer 2+the length of the time interval between retransmission timers 1 and 2, without specifying two retransmission timers for one HARQ process.

In the figure of this example, the base station instructs the UE to send HARQ feedback (i.e., the above special type HARQ feedback types 1 and 2) of multiple processes at one time as an example. When the base station instructs the UE to send HARQ feedback retransmission (i.e., the special type HARQ feedback type 3), the operation is the same and will not be repeated here.

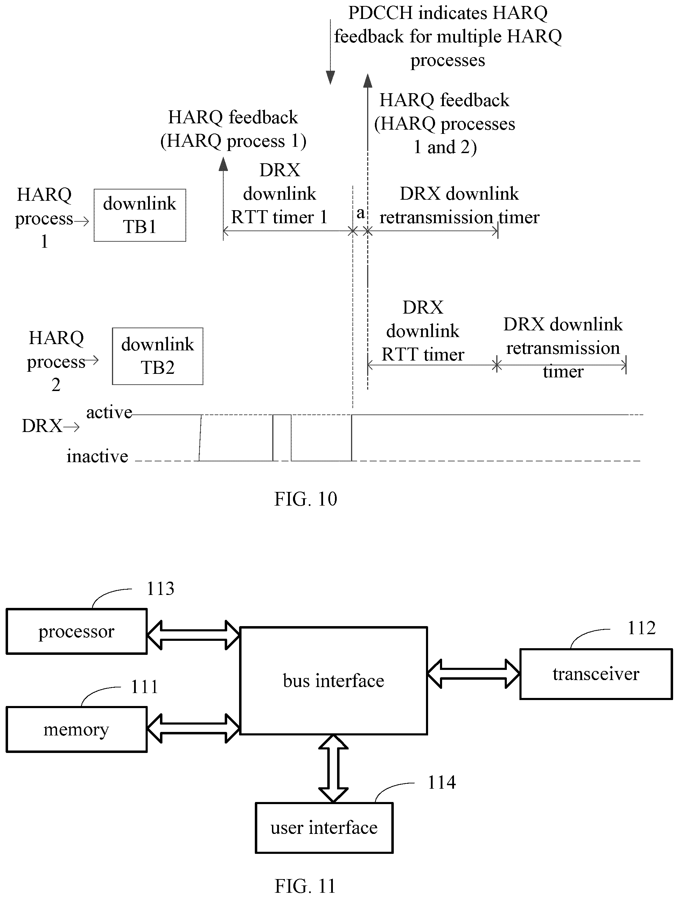

Example 5: before the UE sends the special type of HARQ feedback, the UE starts a DRX downlink retransmission timer (3) of a HARQ process 1.
UE side:
   Step 1: receiving downlink transmission of HARQ process 1 and downlink transmission of HARQ process 2; when the HARQ process 1 has a determined HARQ feedback resource, sending HARQ feedback for the HARQ process 1, starting the DRX downlink RTT timer of the HARQ process 1; and when the DRX downlink RTT timer expires and downlink data is not correctly received, starting the DRX downlink retransmission timer of the HARQ process 1.
   Step 2: after receiving DCI (indicating transmission of special type HARQ feedback) carried on PDCCH from the base station, sending HARQ feedback; as shown in FIG. 10 ("a" in FIG. 10 represents the DRX downlink retransmission timer), where the UE feeds back HARQ feedback for the HARQ process 1 and the HARQ process 2; the UE restarts the DRX downlink retransmission timer of HARQ process 1 (when the downlink data packet of HARQ process 1 is not correctly received); and starts the DRX downlink RTT timer of HARQ process 2.
   Step 3: continuing to run the (restarted) DRX retransmission timer of the HARQ process 1; when the DRX downlink RTT timer of the HARQ process 2 expires, starting (a corresponding) DRX retransmission timer. During operation of any DRX retransmission timer, the UE is in an active state and can receive PDCCH commands from the base station.
Base station side:
   Step 1: sending downlink transmission of HARQ process 1 and downlink transmission of HARQ process 2; when the HARQ process 1 has a determined HARQ feedback resource, receiving HARQ feedback for the HARQ process 1; starting the DRX downlink RTT timer of the HARQ process 1; when the DRX downlink RTT timer expires and downlink data is not correctly received, starting the DRX downlink retransmission timer of the HARQ process 1.
   Step 2: sending DCI (indicating transmission of a special type HARQ feedback) carried by PDCCH, receiving HARQ feedback; as shown in FIG. 10, where the UE feeds back HARQ feedback for the HARQ process 1 and the HARQ process 2, restarts the DRX downlink retransmission timer of the HARQ process 1 (when the downlink data packet of the HARQ process 1 is not correctly received), and starts the DRX downlink RTT timer of the HARQ process 2.
   Step 3: continuing to run the (restarted) DRX retransmission timer of the HARQ process 1; when the DRX downlink RTT timer of the HARQ process 2 expires, starting (a corresponding) DRX retransmission timer. During operation of any DRX retransmission timer, the base station can send a PDCCH scheduling command to the UE.

In the figure of this example, the base station instructs the UE to send HARQ feedback (i.e., the above special type HARQ feedback types 1 and 2) of multiple processes at one time as an example. When the base station instructs the UE to send HARQ feedback retransmission (i.e., the special type HARQ feedback type 3), the operation is the same and will not be repeated here.

It is to be be noted that similar contents in the above examples can be referenced to each other and will not be repeated here.

From the above, when the UE sends the HARQ feedback of multiple HARQ processes at the same time according to an instruction of the base station, or when retransmitting HARQ feedback according to an instruction of the base station, the solution can obtain the retransmission scheduling of the base station as early as possible for the HARQ process for which the DRX downlink RTT timer or the DRX downlink retransmission timer has been started.

One embodiment of the present disclosure further provides a user equipment (UE), as shown in FIG. 11, including a memory 111, a transceiver 112 and a processor 113.

The memory 111 is used to store a computer program; the transceiver 112 is used to send and receive data under control of the processor 113; the processor 113 is used to read the computer program in the memory 111 and perform the following operations:
after performing a first hybrid automatic repeat request (HARQ) feedback, performing a first control operation on a DRX downlink retransmission timer corresponding to at least one first HARQ process;
where the first HARQ feedback is a HARQ feedback triggered by downlink control information (DCI) scheduling;
the first HARQ process refers to a HARQ process for which a first DRX downlink RTT timer has been started or a HARQ process for which a first DRX downlink retransmission timer has been started, before performing the first HARQ feedback, among the HARQ processes corresponding to the first HARQ feedback;
the first control operation includes at least one of the following: in case that the first DRX downlink RTT timer expires and downlink data is not correctly received, starting a second DRX retransmission timer; or maintaining or restarting the first DRX downlink retransmission timer.

The UE provided by the embodiment of the present disclosure performs a first control operation on the DRX downlink retransmission timer corresponding to at least one first HARQ process after performing a first HARQ feedback; where the first HARQ feedback is a HARQ feedback triggered by downlink control information (DCI) scheduling; the first HARQ process refers to a HARQ process for which a first DRX downlink RTT timer has been started or a HARQ process for which a first DRX downlink retransmission timer has been started, before performing the first HARQ feedback, among the HARQ processes corresponding to the first HARQ feedback; the first control operation includes at least one of the following: in case that the first DRX downlink RTT timer expires and downlink data is not correctly received, starting a second DRX retransmission timer; or maintaining or restarting the first DRX downlink retransmission timer. In this way, the UE can support the UE to send HARQ feedbacks of multiple HARQ processes at the same time according to an instruction of the network device; or, avoid the DRX downlink retransmission timer from being stopped or delayed in case of retransmitting HARQ feedback according to an instruction of the network device, so that for the HARQ process that has started the DRX downlink RTT timer or DRX downlink retransmission timer, the retransmission scheduling can be obtained early, thereby ensuring that the retransmission scheduling can be performed in time. Therefore, the UE can effectively solve the problem in the related art that retransmission scheduling cannot be carried out in time caused by the discontinuous reception timer control scheme for special HARQ feedback types.

Specifically, the transceiver 112 is used to receive and send data under the control of the processor 113.

In FIG. 11, a bus architecture may include any number of interconnected bus and bridge. Specifically, various circuits of one or more processors, which are represented by the processor 113, and one or more memories, which are represented by the memory 111, are linked together. The bus architecture may link various other circuits, such as a peripheral device, voltage regulator and a power management circuit together. These features are well known in this field; therefore, this disclosure does not make further description on these features. The bus interface provides an interface. The transceiver 112 may be multiple elements, including a transmitter and a receiver and provide units, which communicate with other devices on the transmission medium. The transmission medium includes radio channels, wired channels, optical cables, etc. For different UEs, a user interface 114 may be an interface that can be connected to external or internal devices. The connected devices include but are not limited to a small keyboard, a display, a speaker, a microphone, a joystick, etc.

The processor 113 is responsible for managing the bus architecture and the normal processing. The memory 111 may be used to store data used by the processor 113 for performing operations.

Optionally, the processor 113 may be a central processing unit (CPU), an application specific integrated circuit (ASIC), a field-programmable gate array (FPGA) or a complex programmable logic device (CPLD). The processor may also adopt multi-core architecture.

The processor calls the computer program stored in the memory to execute any of the methods provided by the embodiments of the present disclosure according to obtained executable instructions. The processor and the memory may also be arranged physically separately.

The HARQ feedback triggered by the DCI scheduling includes at least one of the following: HARQ feedbacks of all current carriers and all HARQ processes fed back by the UE at one time; or HARQ feedbacks of some carriers and/or some HARQ processes fed back by the UE at one time; or the last HARQ feedback retransmitted by the UE.

In the embodiment of the present disclosure, when the first DRX downlink RTT timer expires and the downlink data is not correctly received, starting the second DRX retransmission timer, includes: in case that the first DRX downlink RTT timer has been started before performing the first HARQ feedback, continuing to run the first DRX downlink RTT timer and not starting other DRX downlink RTT timers; in case that the first DRX downlink RTT timer expires and the downlink data is not correctly received, starting the second DRX retransmission timer; or, in case that the first DRX downlink RTT timer has been started before performing the first HARQ feedback, continuing to run the first DRX downlink RTT timer and starting the second DRX downlink RTT timer; in case that the first DRX downlink RTT timer expires and the downlink data is not correctly received, starting the second DRX retransmission timer, and restarting the second DRX retransmission timer in case that the second DRX downlink RTT timer expires.

The maintaining or restarting the first DRX downlink retransmission timer, includes: in case that the first DRX downlink retransmission timer has been started before performing the first HARQ feedback, continuing to run the first DRX downlink retransmission timer and not starting the DRX downlink RTT timer corresponding to the first HARQ process; or, in case that the first DRX downlink retransmission timer has been started before performing the first HARQ feedback, continuing to run the first DRX downlink retransmission timer and starting a third DRX downlink RTT timer; in case that the first DRX downlink retransmission timer expires and downlink data packet is not received correctly, extending duration of DRX downlink retransmission timing; or, in case that the first DRX downlink retransmission timer has been started before performing the first HARQ feedback and the downlink data packet is not received correctly, restarting the first DRX downlink retransmission timer.

In the embodiment of the present disclosure, the extending duration of DRX downlink retransmission timing, includes any one of the following: (1) starting a third DRX downlink retransmission timer in case that the third DRX downlink RTT timer expires; (2) setting the UE to an active state in a time period between the first DRX downlink retransmission timer and the third DRX downlink retransmission timer, and starting the third DRX downlink retransmission timer when the third DRX downlink RTT timer expires; (3) extending duration of the first DRX downlink retransmission timer to a starting moment of the third DRX downlink retransmission timer; and starting the third DRX downlink retransmission timer when the third DRX downlink RTT timer expires; (4) extending the duration of the first DRX downlink retransmission timer to a first duration; the first duration is equal to a sum of the first DRX downlink retransmission timer, the third DRX downlink retransmission timer and a time gap, and the time gap is a time interval between the first DRX downlink retransmission timer and the third DRX downlink retransmission timer.

It is to be noted here that the above user equipment provided in the embodiment of the present disclosure can implement all the method steps implemented in the above UE-side method embodiment, and can achieve the same technical effect. The parts and beneficial effects of this embodiment that are the same as the method embodiment will not be described in detail here.

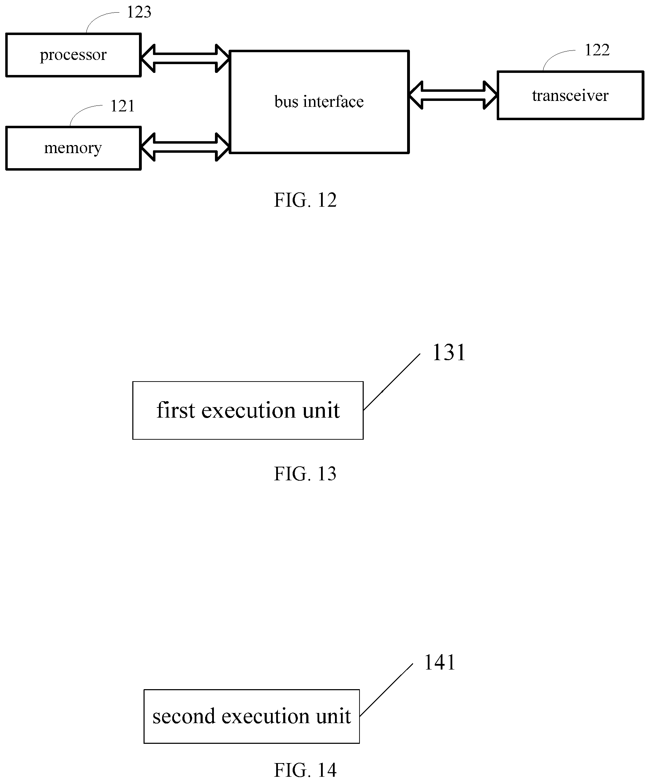

One embodiment of the present disclosure further provides a network device, as shown in FIG. 12, including a memory 121, a transceiver 122 and a processor 123.

The memory 121 is used to store a computer programs. The transceiver 122 is used to send and receive data under the control of the processor 123. The processor 123 is used to read the computer program in the memory 121 and perform the following operations:
after receiving a first hybrid automatic repeat request (HARQ) feedback, performing a first control operation on a DRX downlink retransmission timer corresponding to at least one first HARQ process;
where the first HARQ feedback is a HARQ feedback triggered by DCI scheduling;
the first HARQ process refers to a HARQ process for which a first DRX downlink RTT timer has been started or a HARQ process for which a first DRX downlink retransmission timer has been started, before receiving the first HARQ feedback, among the HARQ processes corresponding to the first HARQ feedback;
the first control operation includes at least one of the following:
   in case that the first DRX downlink RTT timer expires and the first HARQ feedback includes a first acknowledgment feedback, starting a second DRX retransmission timer, where the first acknowledgment feedback is a HARQ negative acknowledgment feedback for the first HARQ process; or,
   maintaining or restarting the first DRX downlink retransmission timer.

The network device provided by the embodiment of the present disclosure performs a first control operation on the DRX downlink retransmission timer corresponding to at least one first HARQ process after receiving a first HARQ feedback; where the first HARQ feedback is a HARQ feedback triggered by downlink control information (DCI) scheduling; the first HARQ process refers to a HARQ process for which a first DRX downlink RTT timer has been started or a HARQ process for which a first DRX downlink retransmission timer has been started, before receiving the first HARQ feedback, among the HARQ processes corresponding to the first HARQ feedback; the first control operation includes at least one of the following: in case that the first DRX downlink RTT timer expires and the first HARQ feedback includes a first acknowledgment feedback, starting a second DRX retransmission timer, where the first acknowledgment feedback is a HARQ negative acknowledgment feedback for the first HARQ process; or, maintaining or restarting the first DRX downlink retransmission timer. In this way, it can support the UE to send HARQ feedbacks of multiple HARQ processes at the same time according to an instruction of the network device; or, avoid the DRX downlink retransmission timer from being stopped or delayed in case of retransmitting HARQ feedback according to an instruction of the network device, so that for the HARQ process that has started the DRX downlink RTT timer or DRX downlink retransmission timer, the retransmission scheduling can be obtained early, thereby ensuring that the retransmission scheduling can be performed in time (that is, the network device can schedule data retransmission in time). Therefore, the network device can effectively solve the problem in the related art that retransmission scheduling cannot be carried out in time caused by the discontinuous reception timer control scheme for special HARQ feedback types.

Specifically, the transceiver 122 is used to receive and send data under the control of the processor 123.

In FIG. 12, a bus architecture may include any number of interconnected bus and bridge. Specifically, various circuits of one or more processors, which are represented by the processor 123, and one or more memories, which are represented by the memory 121, are linked together. The bus architecture may link various other circuits, such as a peripheral device, voltage regulator and a power management circuit together. These features are well known in this field; therefore, this disclosure does not make further description on these features. The bus interface provides an interface. The transceiver 122 may be multiple elements, including a transmitter and a receiver and provide units, which communicate with other devices on the transmission medium. The transmission medium includes radio channels, wired channels, optical cables, etc. The processor 123 is responsible for managing the bus architecture and the normal processing. The memory 121 may be used to store data used by the processor 123 for performing operations.

Optionally, the processor 12300 may be a central processing unit (CPU), an application specific integrated circuit (ASIC), a field-programmable gate array (FPGA) or a complex programmable logic device (CPLD). The processor may also adopt multi-core architecture.

The HARQ feedback triggered by the DCI scheduling includes at least one of the following: HARQ feedbacks of all current carriers and all HARQ processes fed back by the UE at one time; or HARQ feedbacks of some carriers and/or some HARQ processes fed back by the UE at one time; or the last HARQ feedback retransmitted by the UE.

In the embodiment of the present disclosure, when the first DRX downlink RTT timer expires and the first HARQ feedback includes a first acknowledgment feedback, starting the second DRX retransmission timer, includes: in case that the first DRX downlink RTT timer has been started before receiving the first HARQ feedback, continuing to run the first DRX downlink RTT timer and not starting other DRX downlink RTT timers; in case that the first DRX downlink RTT timer expires and the first HARQ feedback includes the first acknowledgment feedback, starting the second DRX retransmission timer; or, in case that the first DRX downlink RTT timer has been started before receiving the first HARQ feedback, continuing to run the first DRX downlink RTT timer and starting the second DRX downlink RTT timer; in case that the first DRX downlink RTT timer expires and the first HARQ feedback includes the first acknowledgment feedback, starting the second DRX retransmission timer, and restarting the second DRX retransmission timer in case that the second DRX downlink RTT timer expires.

The maintaining or restarting the first DRX downlink retransmission timer, includes: in case that the first DRX downlink retransmission timer has been started before receiving the first HARQ feedback, continuing to run the first DRX downlink retransmission timer and not starting the DRX downlink RTT timer corresponding to the first HARQ process; or, in case that the first DRX downlink retransmission timer has been started before receiving the first HARQ feedback, continuing to run the first DRX downlink retransmission timer and starting a third DRX downlink RTT timer; in case that the first DRX downlink retransmission timer expires and the first HARQ feedback includes the first acknowledgment feedback, extending duration of DRX downlink retransmission timing; or, in case that the first DRX downlink retransmission timer has been started before receiving the first HARQ feedback and the first HARQ feedback includes the first acknowledgment feedback, restarting the first DRX downlink retransmission timer.

In the embodiment of the present disclosure, the extending duration of DRX downlink retransmission timing, includes any one of the following: (1) starting a third DRX downlink retransmission timer in case that the third DRX downlink RTT timer expires; (2) setting the UE to an active state in a time period between the first DRX downlink retransmission timer and the third DRX downlink retransmission timer, and starting the third DRX downlink retransmission timer when the third DRX downlink RTT timer expires; (3) extending duration of the first DRX downlink retransmission timer to a starting moment of the third DRX downlink retransmission timer; and starting the third DRX downlink retransmission timer when the third DRX downlink RTT timer expires; (4) extending the duration of the first DRX downlink retransmission timer to a first duration; the first duration is equal to a sum of the first DRX downlink retransmission timer, the third DRX downlink retransmission timer and a time gap, and the time gap is a time interval between the first DRX downlink retransmission timer and the third DRX downlink retransmission timer.

It is to be noted here that the above network device provided in the embodiment of the present disclosure can implement all the method steps implemented in the above method embodiment at the network device side, and can achieve the same technical effect. The parts and beneficial effects of this embodiment that are the same as those in the method embodiment will not be described in detail here.

One embodiment of the present disclosure further provides a discontinuous reception timer control device, which is applied to a user equipment (UE). As shown in FIG. 13, the device includes:
a first execution unit 131 configured to, after performing a first hybrid automatic repeat request (HARQ) feedback, perform a first control operation on a DRX downlink retransmission timer corresponding to at least one first HARQ process;
wherein the first HARQ feedback is a HARQ feedback triggered by downlink control information (DCI) scheduling;
the first HARQ process refers to a HARQ process for which a first DRX downlink RTT timer has been started or a HARQ process for which a first DRX downlink retransmission timer has been started, before performing the first HARQ feedback, among HARQ processes corresponding to the first HARQ feedback;
the first control operation includes at least one of the following:
   starting a second DRX retransmission timer in case that the first DRX downlink RTT timer expires and downlink data is not correctly received; or
   maintaining or restarting the first DRX downlink retransmission timer.

The discontinuous reception timer control device provided by the embodiment of the present disclosure performs a first control operation on the DRX downlink retransmission timer corresponding to at least one first HARQ process after performing a first HARQ feedback; where the first HARQ feedback is a HARQ feedback triggered by downlink control information (DCI) scheduling; the first HARQ process refers to a HARQ process for which a first DRX downlink RTT timer has been started or a HARQ process for which a first DRX downlink retransmission timer has been started, before performing the first HARQ feedback, among the HARQ processes corresponding to the first HARQ feedback; the first control operation includes at least one of the following: in case that the first DRX downlink RTT timer expires and downlink data is not correctly received, starting a second DRX retransmission timer; or maintaining or restarting the first DRX downlink retransmission timer. In this way, the discontinuous reception timer control device can support the UE to send HARQ feedbacks of multiple HARQ processes at the same time according to an instruction of the network device; or, avoid the DRX downlink retransmission timer from being stopped or delayed in case of retransmitting HARQ feedback according to an instruction of the network device, so that for the HARQ process that has started the DRX downlink RTT timer or DRX downlink retransmission timer, the retransmission scheduling can be obtained early, thereby ensuring that the retransmission scheduling can be performed in time. Therefore, the discontinuous reception timer control device can effectively solve the problem in the related art that retransmission scheduling cannot be carried out in time caused by the discontinuous reception timer control scheme for special HARQ feedback types.

The HARQ feedback triggered by the DCI scheduling includes at least one of the following: HARQ feedbacks of all current carriers and all HARQ processes fed back by the UE at one time; or HARQ feedbacks of some carriers and/or some HARQ processes fed back by the UE at one time; or the last HARQ feedback retransmitted by the UE.

In the embodiment of the present disclosure, when the first DRX downlink RTT timer expires and the downlink data is not correctly received, starting the second DRX retransmission timer, includes: in case that the first DRX downlink RTT timer has been started before performing the first HARQ feedback, continuing to run the first DRX downlink RTT timer and not starting other DRX downlink RTT timers; in case that the first DRX downlink RTT timer expires and the downlink data is not correctly received, starting the second DRX retransmission timer; or, in case that the first DRX downlink RTT timer has been started before performing the first HARQ feedback, continuing to run the first DRX downlink RTT timer and starting the second DRX downlink RTT timer; in case that the first DRX downlink RTT timer expires and the downlink data is not correctly received, starting the second DRX retransmission timer, and restarting the second DRX retransmission timer in case that the second DRX downlink RTT timer expires.

The maintaining or restarting the first DRX downlink retransmission timer, includes: in case that the first DRX downlink retransmission timer has been started before performing the first HARQ feedback, continuing to run the first DRX downlink retransmission timer and not starting the DRX downlink RTT timer corresponding to the first HARQ process; or, in case that the first DRX downlink retransmission timer has been started before performing the first HARQ feedback, continuing to run the first DRX downlink retransmission timer and starting a third DRX downlink RTT timer; in case that the first DRX downlink retransmission timer expires and downlink data packet is not received correctly, extending duration of DRX downlink retransmission timing; or, in case that the first DRX downlink retransmission timer has been started before performing the first HARQ feedback and the downlink data packet is not received correctly, restarting the first DRX downlink retransmission timer.

In the embodiment of the present disclosure, the extending duration of DRX downlink retransmission timing, includes any one of the following: (1) starting a third DRX downlink retransmission timer in case that the third DRX downlink RTT timer expires; (2) setting the UE to an active state in a time period between the first DRX downlink retransmission timer and the third DRX downlink retransmission timer, and starting the third DRX downlink retransmission timer when the third DRX downlink RTT timer expires; (3) extending duration of the first DRX downlink retransmission timer to a starting moment of the third DRX downlink retransmission timer; and starting the third DRX downlink retransmission timer when the third DRX downlink RTT timer expires; (4) extending the duration of the first DRX downlink retransmission timer to a first duration; the first duration is equal to a sum of the first DRX downlink retransmission timer, the third DRX downlink retransmission timer and a time gap, and the time gap is a time interval between the first DRX downlink retransmission timer and the third DRX downlink retransmission timer.

It is to be noted here that the above device provided in the embodiment of the present disclosure can implement all the method steps implemented in the above UE-side method embodiment, and can achieve the same technical effect. The parts and beneficial effects of this embodiment that are the same as the method embodiment will not be described in detail here.

One embodiment of the present disclosure further provides a discontinuous reception timer control device, which is applied to a network device. As shown in FIG. 14, the device includes:
a second execution unit 141 configured to, after receiving a first hybrid automatic repeat request (HARQ) feedback, perform a first control operation on a DRX downlink retransmission timer corresponding to at least one first HARQ process;
wherein the first HARQ feedback is a HARQ feedback triggered by DCI scheduling;
the first HARQ process refers to a HARQ process for which a first DRX downlink RTT timer has been started or a HARQ process for which a first DRX downlink retransmission timer has been started, before receiving the first HARQ feedback, among HARQ processes corresponding to the first HARQ feedback;
the first control operation includes at least one of the following:
   in case that the first DRX downlink RTT timer expires and the first HARQ feedback includes a first acknowledgment feedback, starting a second DRX retransmission timer, wherein the first acknowledgment feedback is a HARQ negative acknowledgment feedback for the first HARQ process; or,
   maintaining or restarting the first DRX downlink retransmission timer.

The discontinuous reception timer control devic provided by the embodiment of the present disclosure performs a first control operation on the DRX downlink retransmission timer corresponding to at least one first HARQ process after receiving a first HARQ feedback; where the first HARQ feedback is a HARQ feedback triggered by downlink control information (DCI) scheduling; the first HARQ process refers to a HARQ process for which a first DRX downlink RTT timer has been started or a HARQ process for which a first DRX downlink retransmission timer has been started, before receiving the first HARQ feedback, among the HARQ processes corresponding to the first HARQ feedback; the first control operation includes at least one of the following: in case that the first DRX downlink RTT timer expires and the first HARQ feedback includes a first acknowledgment feedback, starting a second DRX retransmission timer, where the first acknowledgment feedback is a HARQ negative acknowledgment feedback for the first HARQ process; or, maintaining or restarting the first DRX downlink retransmission timer. In this way, it can support the UE to send HARQ feedbacks of multiple HARQ processes at the same time according to an instruction of the network device; or, avoid the DRX downlink retransmission timer from being stopped or delayed in case of retransmitting HARQ feedback according to an instruction of the network device, so that for the HARQ process that has started the DRX downlink RTT timer or DRX downlink retransmission timer, the retransmission scheduling can be obtained early, thereby ensuring that the retransmission scheduling can be performed in time (that is, the network device can schedule data retransmission in time). Therefore, the discontinuous reception timer control device can effectively solve the problem in the related art that retransmission scheduling cannot be carried out in time caused by the discontinuous reception timer control scheme for special HARQ feedback types.

The HARQ feedback triggered by the DCI scheduling includes at least one of the following: HARQ feedbacks of all current carriers and all HARQ processes fed back by the UE at one time; or HARQ feedbacks of some carriers and/or some HARQ processes fed back by the UE at one time; or the last HARQ feedback retransmitted by the UE.

In the embodiment of the present disclosure, when the first DRX downlink RTT timer expires and the first HARQ feedback includes a first acknowledgment feedback, starting the second DRX retransmission timer, includes: in case that the first DRX downlink RTT timer has been started before receiving the first HARQ feedback, continuing to run the first DRX downlink RTT timer and not starting other DRX downlink RTT timers; in case that the first DRX downlink RTT timer expires and the first HARQ feedback includes the first acknowledgment feedback, starting the second DRX retransmission timer; or, in case that the first DRX downlink RTT timer has been started before receiving the first HARQ feedback, continuing to run the first DRX downlink RTT timer and starting the second DRX downlink RTT timer; in case that the first DRX downlink RTT timer expires and the first HARQ feedback includes the first acknowledgment feedback, starting the second DRX retransmission timer, and restarting the second DRX retransmission timer in case that the second DRX downlink RTT timer expires.

The maintaining or restarting the first DRX downlink retransmission timer, includes: in case that the first DRX downlink retransmission timer has been started before receiving the first HARQ feedback, continuing to run the first DRX downlink retransmission timer and not starting the DRX downlink RTT timer corresponding to the first HARQ process; or, in case that the first DRX downlink retransmission timer has been started before receiving the first HARQ feedback, continuing to run the first DRX downlink retransmission timer and starting a third DRX downlink RTT timer; in case that the first DRX downlink retransmission timer expires and the first HARQ feedback includes the first acknowledgment feedback, extending duration of DRX downlink retransmission timing; or, in case that the first DRX downlink retransmission timer has been started before receiving the first HARQ feedback and the first HARQ feedback includes the first acknowledgment feedback, restarting the first DRX downlink retransmission timer.

In the embodiment of the present disclosure, the extending duration of DRX downlink retransmission timing, includes any one of the following: (1) starting a third DRX downlink retransmission timer in case that the third DRX downlink RTT timer expires; (2) setting the UE to an active state in a time period between the first DRX downlink retransmission timer and the third DRX downlink retransmission timer, and starting the third DRX downlink retransmission timer when the third DRX downlink RTT timer expires; (3) extending duration of the first DRX downlink retransmission timer to a starting moment of the third DRX downlink retransmission timer; and starting the third DRX downlink retransmission timer when the third DRX downlink RTT timer expires; (4) extending the duration of the first DRX downlink retransmission timer to a first duration; the first duration is equal to a sum of the first DRX downlink retransmission timer, the third DRX downlink retransmission timer and a time gap, and the time gap is a time interval between the first DRX downlink retransmission timer and the third DRX downlink retransmission timer.

It is to be noted here that the above device provided in the embodiment of the present disclosure can implement all the method steps implemented in the above method embodiment at the network device side, and can achieve the same technical effect. The parts and beneficial effects of this embodiment that are the same as those in the method embodiment will not be described in detail here.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

One embodiment of the present disclosure further provides a processor-readable storage medium, which includes a computer program stored thereon. The computer program is used to cause a processor to execute the foregoing discontinuous reception timer control method applied to the UE, or the computer program is used to cause a processor to execute the foregoing discontinuous reception timer control method applied to the network device side.

The processor-readable storage medium may be any available medium or data storage device that can be accessed by a processor, including but not limited to magnetic storage (such as floppy disk, hard disk, magnetic tape, magneto-optical disk (MO)), optical storage (such as CD, DVD, BD, HVD), and semiconductor memory (such as ROM, EPROM, EEPROM, non-volatile memory (Nand flash), solid-state drive (SSD)).

The implementation embodiments of the discontinuous reception timer control method on the above UE side or the network device side are all applicable to the embodiments of the processor-readable storage medium, and can also achieve the same technical effect.

It is to be noted that division of units in the embodiment of the present disclosure is only a logical function division; in actual implementation, all or part of the units may be integrated into one physical entity, or may also be physically separated. All of these units may be implemented in the form of using processing components to call software, or may be implemented by hardware, or some units are implemented in the form of using processing components to call software and some units are implemented by hardware. For example, the determination unit may be a separate processing element, or may be integrated into a chip of the above device; in addition, the determination unit may also be stored in the form of program codes in the memory of the above device, and is called by a certain processing element of the above device to execute the function of the above determination unit. The implementation of other units is similar. In addition, all or part of these units may be integrated together or implemented independently. The processing element described here may be an integrated circuit with signal processing capabilities. In the implementation process, each step of the above method or each of the above units may be completed by instructions of hardware integrated logic circuits or software in the processor element.

For example, each module, unit, sub-unit or sub-module may be one or more integrated circuits configured to implement the above method, such as one or more application specific integrated circuits (ASICs), or one or multiple digital signal processors (DSP), or one or more field programmable gate arrays (FPGA). For another example, when one of the above units is implemented in the form of using a processing element to call program codes, the processing element may be a general-purpose processor, such as a central processing unit (CPU) or other processors that can call the program codes. For another example, these units may be integrated together and implemented in the form of a system-on-a-chip (SOC).

The terms "first", "second" and the like in the description and claims of the present disclosure are used to distinguish similar objects and are not necessarily used to describe a specific order or sequence. It is to be understood that data so used are interchangeable under appropriate circumstances so that the embodiments of the disclosure described herein may be implemented, for example, in sequences other than those illustrated or described herein. In addition, the terms "including" and "having" and any variations thereof are intended to cover non-exclusive inclusions, for example, a process, method, system, product or device that includes a sequence of steps or units needs not be limited to those steps or units that are expressly listed, but may include steps or units that are not expressly listed or that are inherent to the process, method, product or device. In addition, "and/or" in the description and claims is used to indicate at least one of connected objects, for example, A and/or B and/or C, means that there are seven situations: there is A alone, there is B alone, there is C alone, there are both A and B, there are both B and C, there are both A and C, and there are A, B and C. Similarly, "at least one of A and B" in the specification and claims means that there is A alone, there is B alone, or there are both A and B.

Those skilled in the art should understand that the embodiments of the present application may be provided as methods, systems, or computer program products. Accordingly, in this application, an entirely hardware embodiment, an entirely software embodiment, or an embodiment combining software and hardware aspects may be adopted. Further, this application may adopt the form of a computer program product implemented on one or more computer available storage media (including but not limited to disk memory and optical memory) including computer available program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing devices to create a machine, so that instructions executable by the processor of the computer or the other programmable data processing devices may create a device to achieve the functions assigned in one or more work flows in the flow chart and/or one or more blocks in the block diagram.

These processor-executable instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These processor-executable instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

Obviously, those skilled in the art can make various changes and modifications to the present disclosure without departing from the spirit and scope of the present disclosure. Thus, if these modifications and variations of the present disclosure fall within the scope of the claims of the present disclosure and equivalent technologies thereof, the present disclosure also intends to include these modifications and variations.

## Claims

1. A discontinuous reception (DRX) timer control method, applied to a user equipment (UE), comprising:
after performing a first hybrid automatic repeat request (HARQ) feedback, performing a first control operation on a DRX downlink retransmission timer corresponding to at least one first HARQ process;
wherein the first HARQ feedback is a HARQ feedback triggered by downlink control information (DCI) scheduling;
the first HARQ process refers to a HARQ process for which a first DRX downlink RTT timer has been started or a HARQ process for which a first DRX downlink retransmission timer has been started, before performing the first HARQ feedback, among HARQ processes corresponding to the first HARQ feedback;
the first control operation includes at least one of the following:
starting a second DRX retransmission timer in case that the first DRX downlink RTT timer expires and downlink data is not correctly received; or
maintaining or restarting the first DRX downlink retransmission timer.

2. The method according to claim 1, wherein the HARQ feedback triggered by the DCI scheduling includes at least one of the following:
HARQ feedbacks of all current carriers and all HARQ processes fed back by the UE at one time; or,
HARQ feedbacks of some carriers and/or some HARQ processes fed back by the UE at one time; or,
last HARQ feedback retransmitted by the UE.

3. The method according to claim 1, wherein the starting a second DRX retransmission timer in case that the first DRX downlink RTT timer expires and downlink data is not correctly received, includes:
in case that the first DRX downlink RTT timer has been started before performing the first HARQ feedback, continuing to run the first DRX downlink RTT timer and not starting other DRX downlink RTT timers; in case that the first DRX downlink RTT timer expires and downlink data is not correctly received, starting the second DRX retransmission timer; or,
in case that the first DRX downlink RTT timer has been started before performing the first HARQ feedback, continuing to run the first DRX downlink RTT timer and starting the second DRX downlink RTT timer; in case that the first DRX downlink RTT timer expires and the downlink data is not correctly received, starting the second DRX retransmission timer, and restarting the second DRX retransmission timer in case that the second DRX downlink RTT timer expires.

4. The method according to claim 1, wherein the maintaining or restarting the first DRX downlink retransmission timer, includes:
in case that the first DRX downlink retransmission timer has been started before performing the first HARQ feedback, continuing to run the first DRX downlink retransmission timer and not starting DRX downlink RTT timer corresponding to the first HARQ process; or,
in case that the first DRX downlink retransmission timer has been started before performing the first HARQ feedback, continuing to run the first DRX downlink retransmission timer and starting a third DRX downlink RTT timer; in case that the first DRX downlink retransmission timer expires and downlink data packet is not received correctly, extending duration of DRX downlink retransmission timing; or,
in case that the first DRX downlink retransmission timer has been started before performing the first HARQ feedback and the downlink data packet is not received correctly, restarting the first DRX downlink retransmission timer; or,
in case that the first DRX downlink retransmission timer has been started before performing the first HARQ feedback, restarting the first DRX downlink retransmission timer; or,
in case that the first DRX downlink retransmission timer expires and the downlink data packet is not received correctly, restarting the first DRX downlink retransmission timer.

5. The method according to claim 4, wherein the extending duration of DRX downlink retransmission timing, includes any one of the following:
starting a third DRX downlink retransmission timer in case that the third DRX downlink RTT timer expires;
setting the UE to an active state in a time period between the first DRX downlink retransmission timer and the third DRX downlink retransmission timer, and starting the third DRX downlink retransmission timer when the third DRX downlink RTT timer expires;
extending duration of the first DRX downlink retransmission timer to a starting moment of the third DRX downlink retransmission timer; and starting the third DRX downlink retransmission timer when the third DRX downlink RTT timer expires;
extending the duration of the first DRX downlink retransmission timer to a first duration; wherein the first duration is equal to a sum of the first DRX downlink retransmission timer, the third DRX downlink retransmission timer and a time gap, and the time gap is a time interval between the first DRX downlink retransmission timer and the third DRX downlink retransmission timer.

6. A discontinuous reception (DRX) timer control method, applied to a network device, comprising:
after receiving a first hybrid automatic repeat request (HARQ) feedback, performing a first control operation on a DRX downlink retransmission timer corresponding to at least one first HARQ process;
wherein the first HARQ feedback is a HARQ feedback triggered by DCI scheduling;
the first HARQ process refers to a HARQ process for which a first DRX downlink RTT timer has been started or a HARQ process for which a first DRX downlink retransmission timer has been started, before receiving the first HARQ feedback, among HARQ processes corresponding to the first HARQ feedback;
the first control operation includes at least one of the following:
in case that the first DRX downlink RTT timer expires and the first HARQ feedback includes a first acknowledgment feedback, starting a second DRX retransmission timer, wherein the first acknowledgment feedback is a HARQ negative acknowledgment feedback for the first HARQ process; or,
maintaining or restarting the first DRX downlink retransmission timer.

7. The method according to claim 6, wherein the HARQ feedback triggered by the DCI scheduling includes at least one of the following:
HARQ feedbacks of all current carriers and all HARQ processes fed back by the UE at one time; or,
HARQ feedbacks of some carriers and/or some HARQ processes fed back by the UE at one time; or,
last HARQ feedback retransmitted by the UE.

8. The method according to claim 6, wherein in case that the first DRX downlink RTT timer expires and the first HARQ feedback includes a first acknowledgment feedback, starting a second DRX retransmission timer, includes:
in case that the first DRX downlink RTT timer has been started before receiving the first HARQ feedback, continuing to run the first DRX downlink RTT timer and not starting other DRX downlink RTT timers;
in case that the first DRX downlink RTT timer expires and the first HARQ feedback includes the first acknowledgment feedback, starting the second DRX retransmission timer; or,
in case that the first DRX downlink RTT timer has been started before receiving the first HARQ feedback, continuing to run the first DRX downlink RTT timer and starting the second DRX downlink RTT timer; in case that the first DRX downlink RTT timer expires and the first HARQ feedback includes the first acknowledgment feedback, starting the second DRX retransmission timer, and restarting the second DRX retransmission timer in case that the second DRX downlink RTT timer expires.

9. The method according to claim 6, wherein the maintaining or restarting the first DRX downlink retransmission timer, includes:
in case that the first DRX downlink retransmission timer has been started before receiving the first HARQ feedback, continuing to run the first DRX downlink retransmission timer and not starting DRX downlink RTT timer corresponding to the first HARQ process; or,
in case that the first DRX downlink retransmission timer has been started before receiving the first HARQ feedback, continuing to run the first DRX downlink retransmission timer and starting a third DRX downlink RTT timer; in case that the first DRX downlink retransmission timer expires and the first HARQ feedback includes the first acknowledgment feedback, extending duration of DRX downlink retransmission timing; or,
in case that the first DRX downlink retransmission timer has been started before receiving the first HARQ feedback and the first HARQ feedback includes the first acknowledgment feedback, restarting the first DRX downlink retransmission timer; or,
in case that the first DRX downlink retransmission timer has been started before receiving the first HARQ feedback, restarting the first DRX downlink retransmission timer; or,
in case that the first DRX downlink retransmission timer expires and the downlink data packet is not received correctly, restarting the first DRX downlink retransmission timer.

10. The method according to claim 9, wherein the extending duration of DRX downlink retransmission timing, includes any one of the following:
starting a third DRX downlink retransmission timer in case that the third DRX downlink RTT timer expires;
setting the UE to an active state in a time period between the first DRX downlink retransmission timer and the third DRX downlink retransmission timer, and starting the third DRX downlink retransmission timer when the third DRX downlink RTT timer expires;
extending duration of the first DRX downlink retransmission timer to a starting moment of the third DRX downlink retransmission timer; and starting the third DRX downlink retransmission timer when the third DRX downlink RTT timer expires;
extending the duration of the first DRX downlink retransmission timer to a first duration; wherein the first duration is equal to a sum of the first DRX downlink retransmission timer, the third DRX downlink retransmission timer and a time gap, and the time gap is a time interval between the first DRX downlink retransmission timer and the third DRX downlink retransmission timer.

11. A user equipment (UE), comprising a memory, a transceiver and a processor;
wherein the memory is used to store a computer program; the transceiver is used to send and receive data under control of the processor; and the processor is used to read the computer program in the memory and perform the following operations:
after performing a first hybrid automatic repeat request (HARQ) feedback, performing a first control operation on a DRX downlink retransmission timer corresponding to at least one first HARQ process;
wherein the first HARQ feedback is a HARQ feedback triggered by downlink control information (DCI) scheduling;
the first HARQ process refers to a HARQ process for which a first DRX downlink RTT timer has been started or a HARQ process for which a first DRX downlink retransmission timer has been started, before performing the first HARQ feedback, among HARQ processes corresponding to the first HARQ feedback;
the first control operation includes at least one of the following:
starting a second DRX retransmission timer in case that the first DRX downlink RTT timer expires and downlink data is not correctly received; or
maintaining or restarting the first DRX downlink retransmission timer.

12. The UE according to claim 11, wherein the HARQ feedback triggered by the DCI scheduling includes at least one of the following:
HARQ feedbacks of all current carriers and all HARQ processes fed back by the UE at one time; or,
HARQ feedbacks of some carriers and/or some HARQ processes fed back by the UE at one time; or,
last HARQ feedback retransmitted by the UE.

13. The UE according to claim 11, wherein the starting a second DRX retransmission timer in case that the first DRX downlink RTT timer expires and downlink data is not correctly received, includes:
in case that the first DRX downlink RTT timer has been started before performing the first HARQ feedback, continuing to run the first DRX downlink RTT timer and not starting other DRX downlink RTT timers; in case that the first DRX downlink RTT timer expires and downlink data is not correctly received, starting the second DRX retransmission timer; or,
in case that the first DRX downlink RTT timer has been started before performing the first HARQ feedback, continuing to run the first DRX downlink RTT timer and starting the second DRX downlink RTT timer; in case that the first DRX downlink RTT timer expires and the downlink data is not correctly received, starting the second DRX retransmission timer, and restarting the second DRX retransmission timer in case that the second DRX downlink RTT timer expires.

14. The UE according to claim 11, wherein the maintaining or restarting the first DRX downlink retransmission timer, includes:
in case that the first DRX downlink retransmission timer has been started before performing the first HARQ feedback, continuing to run the first DRX downlink retransmission timer and not starting DRX downlink RTT timer corresponding to the first HARQ process; or,
in case that the first DRX downlink retransmission timer has been started before performing the first HARQ feedback, continuing to run the first DRX downlink retransmission timer and starting a third DRX downlink RTT timer; in case that the first DRX downlink retransmission timer expires and downlink data packet is not received correctly, extending duration of DRX downlink retransmission timing; or,
in case that the first DRX downlink retransmission timer has been started before performing the first HARQ feedback and the downlink data packet is not received correctly, restarting the first DRX downlink retransmission timer; or,
in case that the first DRX downlink retransmission timer has been started before performing the first HARQ feedback, restarting the first DRX downlink retransmission timer; or,
in case that the first DRX downlink retransmission timer expires and the downlink data packet is not received correctly, restarting the first DRX downlink retransmission timer.

15. The UE according to claim 14, wherein the extending duration of DRX downlink retransmission timing, includes any one of the following:
starting a third DRX downlink retransmission timer in case that the third DRX downlink RTT timer expires;
setting the UE to an active state in a time period between the first DRX downlink retransmission timer and the third DRX downlink retransmission timer, and starting the third DRX downlink retransmission timer when the third DRX downlink RTT timer expires;
extending duration of the first DRX downlink retransmission timer to a starting moment of the third DRX downlink retransmission timer; and starting the third DRX downlink retransmission timer when the third DRX downlink RTT timer expires;
extending the duration of the first DRX downlink retransmission timer to a first duration; wherein the first duration is equal to a sum of the first DRX downlink retransmission timer, the third DRX downlink retransmission timer and a time gap, and the time gap is a time interval between the first DRX downlink retransmission timer and the third DRX downlink retransmission timer.

16. A network device, comprising a memory, a transceiver and a processor;
wherein the memory is used to store a computer program; the transceiver is used to send and receive data under control of the processor; and the processor is used to read the computer program in the memory and perform the following operations:
after receiving a first hybrid automatic repeat request (HARQ) feedback, performing a first control operation on a DRX downlink retransmission timer corresponding to at least one first HARQ process;
wherein the first HARQ feedback is a HARQ feedback triggered by DCI scheduling;
the first HARQ process refers to a HARQ process for which a first DRX downlink RTT timer has been started or a HARQ process for which a first DRX downlink retransmission timer has been started, before receiving the first HARQ feedback, among HARQ processes corresponding to the first HARQ feedback;
the first control operation includes at least one of the following:
in case that the first DRX downlink RTT timer expires and the first HARQ feedback includes a first acknowledgment feedback, starting a second DRX retransmission timer, wherein the first acknowledgment feedback is a HARQ negative acknowledgment feedback for the first HARQ process; or,
maintaining or restarting the first DRX downlink retransmission timer.

17. The network device according to claim 16, wherein the HARQ feedback triggered by the DCI scheduling includes at least one of the following:
HARQ feedbacks of all current carriers and all HARQ processes fed back by the UE at one time; or,
HARQ feedbacks of some carriers and/or some HARQ processes fed back by the UE at one time; or,
last HARQ feedback retransmitted by the UE.

18. The network device according to claim 16, wherein in case that the first DRX downlink RTT timer expires and the first HARQ feedback includes a first acknowledgment feedback, starting a second DRX retransmission timer, includes:
in case that the first DRX downlink RTT timer has been started before receiving the first HARQ feedback, continuing to run the first DRX downlink RTT timer and not starting other DRX downlink RTT timers;
in case that the first DRX downlink RTT timer expires and the first HARQ feedback includes the first acknowledgment feedback, starting the second DRX retransmission timer; or,
in case that the first DRX downlink RTT timer has been started before receiving the first HARQ feedback, continuing to run the first DRX downlink RTT timer and starting the second DRX downlink RTT timer; in case that the first DRX downlink RTT timer expires and the first HARQ feedback includes the first acknowledgment feedback, starting the second DRX retransmission timer, and restarting the second DRX retransmission timer in case that the second DRX downlink RTT timer expires.

19. The network device according to claim 16, wherein the maintaining or restarting the first DRX downlink retransmission timer, includes:
in case that the first DRX downlink retransmission timer has been started before receiving the first HARQ feedback, continuing to run the first DRX downlink retransmission timer and not starting DRX downlink RTT timer corresponding to the first HARQ process; or,
in case that the first DRX downlink retransmission timer has been started before receiving the first HARQ feedback, continuing to run the first DRX downlink retransmission timer and starting a third DRX downlink RTT timer; in case that the first DRX downlink retransmission timer expires and the first HARQ feedback includes the first acknowledgment feedback, extending duration of DRX downlink retransmission timing; or,
in case that the first DRX downlink retransmission timer has been started before receiving the first HARQ feedback and the first HARQ feedback includes the first acknowledgment feedback, restarting the first DRX downlink retransmission timer; or,
in case that the first DRX downlink retransmission timer has been started before receiving the first HARQ feedback, restarting the first DRX downlink retransmission timer; or,
in case that the first DRX downlink retransmission timer expires and the downlink data packet is not received correctly, restarting the first DRX downlink retransmission timer.

20. The network device according to claim 19, wherein the extending duration of DRX downlink retransmission timing, includes any one of the following:
starting a third DRX downlink retransmission timer in case that the third DRX downlink RTT timer expires;
setting the UE to an active state in a time period between the first DRX downlink retransmission timer and the third DRX downlink retransmission timer, and starting the third DRX downlink retransmission timer when the third DRX downlink RTT timer expires;
extending duration of the first DRX downlink retransmission timer to a starting moment of the third DRX downlink retransmission timer; and starting the third DRX downlink retransmission timer when the third DRX downlink RTT timer expires;
extending the duration of the first DRX downlink retransmission timer to a first duration; wherein the first duration is equal to a sum of the first DRX downlink retransmission timer, the third DRX downlink retransmission timer and a time gap, and the time gap is a time interval between the first DRX downlink retransmission timer and the third DRX downlink retransmission timer.

21. A discontinuous reception (DRX) timer control device, applied to a user equipment (UE), comprising:
a first execution unit configured to, after performing a first hybrid automatic repeat request (HARQ) feedback, perform a first control operation on a DRX downlink retransmission timer corresponding to at least one first HARQ process;
wherein the first HARQ feedback is a HARQ feedback triggered by downlink control information (DCI) scheduling;
the first HARQ process refers to a HARQ process for which a first DRX downlink RTT timer has been started or a HARQ process for which a first DRX downlink retransmission timer has been started, before performing the first HARQ feedback, among HARQ processes corresponding to the first HARQ feedback;
the first control operation includes at least one of the following:
starting a second DRX retransmission timer in case that the first DRX downlink RTT timer expires and downlink data is not correctly received; or
maintaining or restarting the first DRX downlink retransmission timer.

22. A discontinuous reception (DRX) control device, applied to a network device, comprising:
a second execution unit configured to, after receiving a first hybrid automatic repeat request (HARQ) feedback, perform a first control operation on a DRX downlink retransmission timer corresponding to at least one first HARQ process;
wherein the first HARQ feedback is a HARQ feedback triggered by DCI scheduling;
the first HARQ process refers to a HARQ process for which a first DRX downlink RTT timer has been started or a HARQ process for which a first DRX downlink retransmission timer has been started, before receiving the first HARQ feedback, among HARQ processes corresponding to the first HARQ feedback;
the first control operation includes at least one of the following:
in case that the first DRX downlink RTT timer expires and the first HARQ feedback includes a first acknowledgment feedback, starting a second DRX retransmission timer, wherein the first acknowledgment feedback is a HARQ negative acknowledgment feedback for the first HARQ process; or,
maintaining or restarting the first DRX downlink retransmission timer.

23. A processor-readable storage medium, comprising a computer program stored thereon; wherein the computer program, when executed by the processor, causes the processor to perform the method according to any one of claims 1 to 5; or,
the computer program, when executed by the processor, causes the processor to perform the method according to any one of claims 6 to 10.
